(19) Europäisches Patentamt
European Patent Office
Office européen des brevets

(11) **EP 2 073 146 A1**

(12) **EUROPEAN PATENT APPLICATION**
published in accordance with Art. 153(4) EPC

(43) Date of publication:
**24.06.2009 Bulletin 2009/26**

(51) Int Cl.:
*G06K 9/62* (2006.01)

(21) Application number: **07791060.2**

(22) Date of filing: **20.07.2007**

(86) International application number:
**PCT/JP2007/064322**

(87) International publication number:
**WO 2008/044380 (17.04.2008 Gazette 2008/16)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **11.10.2006 JP 2006277737**

(71) Applicant: **Sharp Kabushiki Kaisha**
**Osaka-shi, Osaka 545-8522 (JP)**

(72) Inventors:
• **KUWATA, Minako**
**Ikoma-shi, Nara 630-0246 (JP)**
• **KOYAMA, Noriyuki**
**Sorakugun, Kyoto 619-0238 (JP)**

(74) Representative: **Müller - Hoffmann & Partner**
**Patentanwälte**
**Innere Wiener Strasse 17**
**81667 München (DE)**

(54) **PATTERN RECOGNIZING DEVICE FOR RECOGNIZING INPUT PATTERN BY USING DICTIONARY PATTERN**

(57)    A pattern recognition device (1) includes a collation vector extraction unit (823) generating an input collation vector consisting of a prescribed number of components indicating a feature of an input pattern, each component indicating 1 or 0, and a collation vector matching score determination unit (824) calculating a matching score based on an inner product of each dictionary collation vector read from a dictionary collation vector accumulation buffer (813) and the input collation vector. The input collation vector is collated with a dictionary feature vector for which matching score higher than a prescribed threshold value has been calculated, and a dictionary pattern corresponding to the dictionary collation vector determined as matching with the input collation vector based on a result of collation is read from dictionary data (811) and output.

FIG.1

**Description**

TECHNICAL FIELD

The present invention relates to a pattern recognition device recognizing an input pattern, and particularly to a pattern recognition device determining with which of a plurality of different dictionary patterns an input pattern matches.

BACKGROUND ART

Conventionally, a character recognition device such as an optical character reader (abbreviated as OCR) generally attains character recognition based on pattern matching. In pattern matching, initially, a feature vector is extracted from an input character image. Here, a feature vector extracted from an input character image is referred to as an input feature vector. Then, processing for collating the input feature vector with a standard feature vector registered in advance in dictionary data in correspondence with each character (hereinafter referred to as a dictionary feature vector) is performed. A character corresponding to the dictionary feature vector determined as most similar in pattern as a result of the collation processing is provided as a recognition result and output.

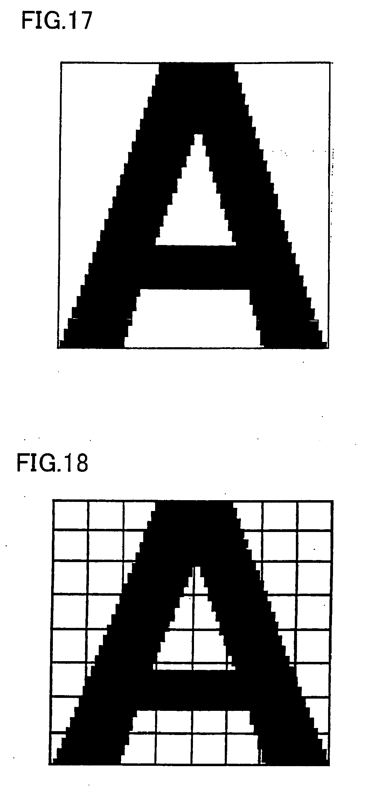

Here, a mesh feature vector in connection with the feature vector is illustrated. Fig. 17 shows an example of a character image cut in a rectangular shape from an input image in order to extract a feature vector. By mesh-dividing the character image in Fig. 17, the character image is divided into a plurality of areas. Based on the number of pixels in each area of the mesh-divided character image, the number of pixels in each area is subjected to such processing as normalization. A vector including, as a component, a value indicating the number of pixels in each area calculated in the processing is generated. The vector thus generated is referred to as a mesh feature vector.

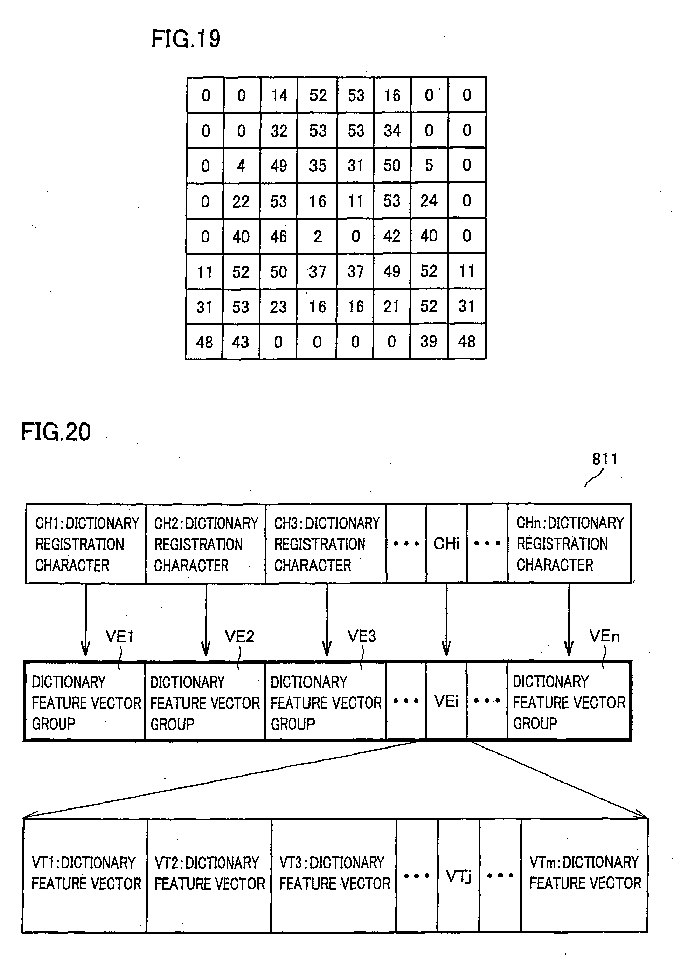

Fig. 18 shows a state that the rectangular character image in Fig. 17 is mesh-divided into 64 areas of 8×8. Fig. 19 shows each component of a mesh feature vector generated from the mesh-divided image shown in Fig. 18, in correspondence with each area. Fig. 19 shows that the mesh feature vector has 64 components (8x8) and one character is defined by the feature vector consisting of 64 components.

Dictionary data 811 referred to in pattern recognition will be described with reference to Fig. 20. Dictionary data 811 in Fig. 20 includes a plurality of types of dictionary registration characters CHi (i = 1, 2, 3, ..., and n) and a dictionary feature vector group VEi (i = 1, 2, 3, ..., and n) in correspondence with dictionary registration character CHi. Dictionary feature vector group VEi includes m dictionary feature vectors VTj (j = 1, 2, 3, ..., and m) for corresponding dictionary registration character CHi. Here, dictionary registration character CHi indicates a character code identifying that character.

A feature vector VTi refers to a feature vector statistically generated for various types of fonts (typefaces such as mincho, gothic, and the like) by learning characters of a plurality of types of fonts for corresponding dictionary registration character CHi. Feature vector VTi may refer to a feature vector statistically generated by learning a tilted character, a faded character, a blurred character, or the like.

It is assumed that the dictionary data basically stores m feature vectors VTj for any dictionary registration character CHi. Specifically, all fonts are learned to generate a first feature vector VT1 to an mth feature vector VTm. First feature vector VT1 indicates a result of calculation of an average of all learning vectors. A second feature vector VT2 indicates a result of calculation of a vector orthogonal to first feature vector VT1. A third vector VT3 indicates a result of calculation of a vector orthogonal to second feature vector VT2. Calculation is similarly carried out up to feature vector VTm and a calculation result is indicated.

Conventionally, in an operation for pattern matching using feature vector VTj, a city block distance, a Euclidean distance, similarity, or the like is employed. These are all well-known measures generally used for pattern recognition. In pattern recognition, assuming an unknown vector and a standard vector, a distance or similarity between the standard vector and the unknown vector is calculated, and a character code indicated by the closest (most similar) character code CHi based on a result of calculation is output as a recognition result.

In an example where an input character and a dictionary registration character serving as reference for matching are each defined by a feature vector consisting of 64 components resulting from mesh-division into equal parts shown in Fig. 19, equations for calculating a city block distance and similarity are shown as Equations (1) and (2) below respectively.

$$D = \sum_{i=1}^{64} \left| x_i - y_i \right| \qquad \text{... Equation (1)}$$

$$S = \sum_{i=1}^{64} x_i y_i \qquad \qquad \text{... Equation (2)}$$

A feature vector of an input character (hereinafter referred to as an input feature vector) is denoted by X (a vector X consisting of 64 components of X1, X2, ..., and X64) and a feature vector of dictionary registration character CHi serving as reference for matching (hereinafter referred to as a dictionary feature vector) is denoted by Y (a vector Y consisting of 64 components of Y1, Y2, ..., and Y64). A city block distance D is calculated in accordance with Equation (1) and simple similarity S is calculated in accordance with Equation (2).

As described above, pattern matching is carried out based on processing for matching between the input feature vector extracted from the input character image and the dictionary feature vector registered in advance. As this matching processing requires time, a method for shortening this time has conventionally been proposed

Patent Document 1 (Japanese Patent Laying-Open No. 63-109592) discloses a method of registering a threshold value for determining whether to perform detailed matching or not in a threshold value table for each type of character and aborting matching at a time point when a distance d between a dictionary k and an input feature vector exceeds a threshold value Thk.

In addition, according to the conventional art, in matching processing, initially, top P characters of which matching distance to a first feature vector of the dictionary is small are extracted, and for extracted P characters, matching in connection with a second feature vector to a Zth feature vector is performed for further detailed identification.

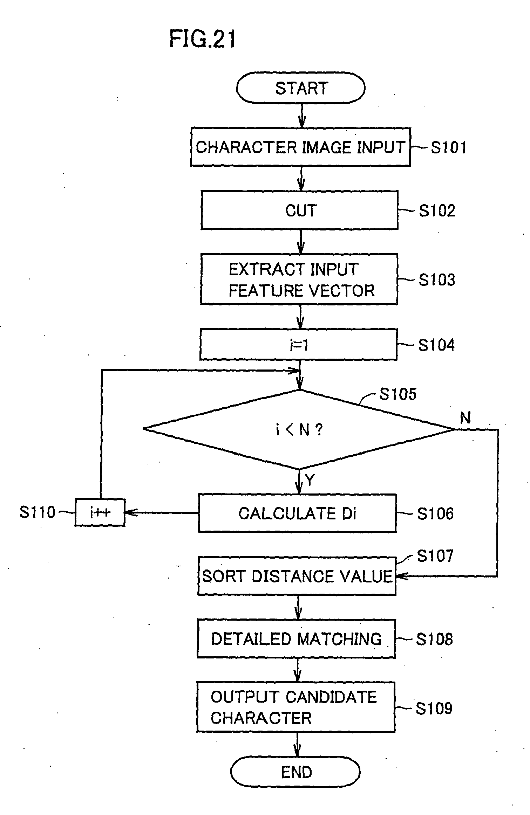

Processing for speedup of pattern matching, that has conventionally been used in a character recognition device such as an OCR, will now be described with reference to Fig. 21. In the description below, matching is performed using a mesh feature vector.

First, outlines of the matching processing will be described. In Fig. 21, initially, a distance between the input character and all dictionary registration characters is calculated. Namely, a distance (for example, a city block distance) between the input feature vector extracted from the input character image and the dictionary feature vector of all characters registered in the dictionary is calculated. A smaller value of the calculated distance indicates that an error is small and the input character pattern is similar to the dictionary registration character pattern.

In the example in Fig. 21, the distance above is calculated in accordance with the equation for calculating the city block distance shown in Equation (1), by cumulatively adding differences between components of the input feature vector and the dictionary feature vector.

When calculation of the corresponding distance for all dictionary registration characters ends, top P dictionary registration characters in a sequence of the dictionary registration characters arranged in ascending order of magnitude of the value of the calculated corresponding distance are extracted. Thereafter, detailed matching for extracted P dictionary registration characters is performed. In detailed matching, not only operation of a distance from the first feature vector of the dictionary but also operation of a distance from all dictionary feature vectors from the second feature vector to the Zth feature vector are performed.

Detailed description will now be provided in accordance with the flowchart in Fig. 21. Initially, an OCR has an optical reading unit, a recognition unit, and a storage unit. Initially, the optical reading unit reads a character written on a sheet of paper, and an image representing a result of reading is output. The recognition unit receives an input of the image output from the optical reading unit (step S101) and cuts a character image from the input image (step S102). As shown in Patent Document 2 (Japanese Patent Laying-Open No. 63-216188), the character image is cut in such a manner that a black pixel is extracted from the input image and a character row is extracted based on this result of extraction. Thereafter, the character image is cut in accordance with a histogram in a direction perpendicular to the extracted row.

The input character image is mesh-divided and subjected to such processing as normalization based on the number of pixels in each of a plurality of mesh-divided areas. Based on a result of this processing, an input feature vector is extracted (generated) (step S103).

A value of a variable i indicating a matching counter is then initialized, that is, set as i = 1 (step S 104). Here, the number of all characters registered in a dictionary stored in advance in the storage unit of the OCR is assumed as N.

Then, processing for pattern matching of the input character (cut character) with each of all characters registered in the dictionary is performed in the following manner. Pattern matching processing refers to calculation of a distance between an input feature vector of an input character and a dictionary feature vector of a character registered in a dictionary.

Initially, in pattern matching between the input character and the registered character, determination of an end, i.e., determination as to whether calculation of a distance for all characters registered in advance in the dictionary has ended or not, is made (step S105). Here, when it is determined that calculation of a distance for all characters has not yet ended (i < N), a distance between the input feature vector and the first feature vector of the character registered in the dictionary is calculated and the calculated distance is set to a variable Di (step S106). Here, variable Di is also referred to as a distance value Di.

When distance value Di is calculated for one dictionary registration character, a value of variable i is incremented by 1 (step S110). The incremented value of variable i indicates the number of characters in the dictionary for which calculation of the distance has ended by now. Then, determination as to whether calculation of distance value Di for all characters in the dictionary, that is, matching, has ended or not is made (step S105). When matching for all characters has ended (relation of i < N is not satisfied), variables Di (i = 0, 1, 2, 3, ..., and N) storing a result of calculation of the distance are sorted in ascending order of values thereof (step S107).

Detailed matching with dictionary registration characters corresponding to top P variables Di in a sequence which indicates the result of sorting is performed (step S108). The dictionary registration character determined as close in pattern to the input character based on the result of detailed matching is read from the dictionary and output as a matching result, that is, as a candidate character (step S109). Then the process ends.

In order to achieve speedup as compared with the procedure for recognition processing in Fig. 21, a method of introducing skip processing based on a threshold value in an operation to calculate a distance has also been proposed.

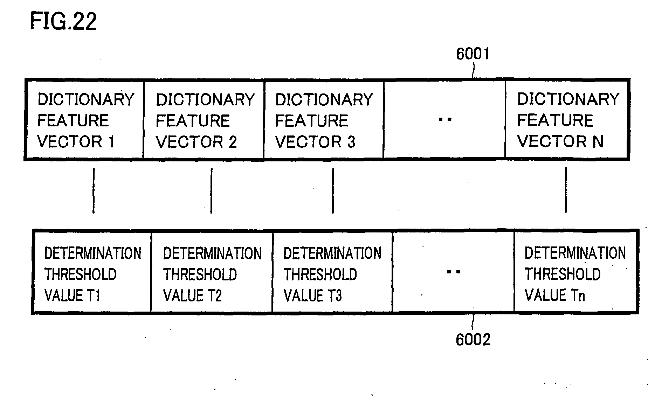

Fig. 22 illustrates a threshold value table 6002 referred to in skip processing based on a threshold value. Referring to Fig. 22, in association with each character registered in dictionary data 6001, a threshold value Ti for such a registered character (i = 1, 2, 3, ..., and n) is registered in advance in threshold value table 6002. For example, threshold value Tn is a threshold value corresponding to a registered character CHn in the dictionary data. Threshold value Ti is a value statistically calculated based on learning data, and for example, it is ensured that a distance between a dictionary feature vector registered in correspondence with registered character CHi in dictionary data 6001 and any input feature vector for registered character CHi is within a range defined by threshold value Ti without exception.

A distance between the input character and the dictionary registration character is calculated by cumulatively adding differences between components of the input feature vector and the dictionary feature vector. As threshold value Ti of the distance is set for each character registered in the dictionary, such processing that cumulative addition operation up to a subsequent component is continued only during a period in which the value calculated by cumulative addition indicates a value not higher than threshold value Ti and the operation is discontinued when a value calculated by cumulative addition indicates a value greater than the threshold value set as above can be performed.

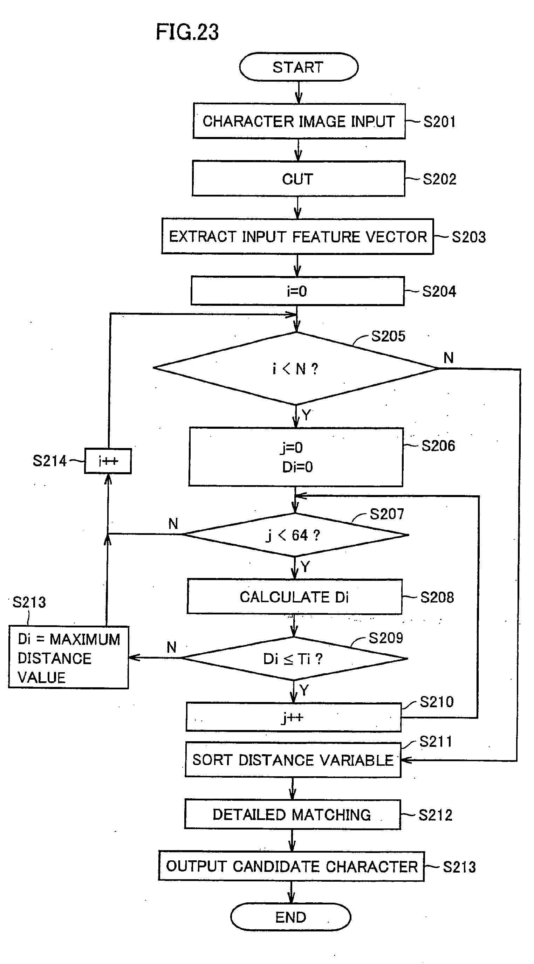

Fig. 23 is a flowchart of pattern matching in which an operation for calculating a distance is skipped based on threshold value Ti. As step S201 to step S205 in Fig. 23 are similar in processing contents to step S101 to step S105 in Fig. 21, description will not be provided.

In calculating a distance, an operation to cumulatively add differences between components of the input feature vector of the input character and the dictionary feature vector of the character registered in the dictionary is performed as in the processing in Fig. 21.

As described previously, in the processing in Fig. 23, while the value of the distance calculated by cumulative addition is not greater than threshold value Ti set for each dictionary registration character, the operation of cumulative addition up to a subsequent component is continued, whereas when the value of the calculated distance is greater than threshold value Ti, cumulative operation is discontinued, the distance for the currently handled character is detected, and transition to calculation of a distance for a next character is made (steps S206 to S208).

In step S209, determination as to whether the distance calculated by cumulative addition for the currently handled character is equal to or smaller than determination threshold value Ti stored in threshold value table 6002 is made. When the distance is equal to or smaller than determination threshold value Ti (relation of Di ≤ Ti is satisfied) in this determination, the process proceeds to step S210, in which a matching component counter "i" is incremented and operation for calculating the distance is continued.

When the distance is greater than the determination threshold value (relation of Di ≤ Ti is not satisfied), the distance for the currently handled character is detected, the maximum value of the calculated distance is stored in distance variable Di in step S213, matching dictionary counter "i" is incremented in step S214, and the process proceeds to calculation of the distance for a next character.

As subsequent processing (steps S211 to S213) is similar in contents to the processing in Fig. 21, description will not be provided. The foregoing are a conventional example of a method for speedup of pattern matching by introducing skip processing based on a threshold value.

As described above, speedup of pattern matching has been achieved by employing various methods for decreasing the number of times of operation of a distance in a conventional character recognition device.

Patent Document 1: Japanese Patent Laying-Open No. 63-109592
Patent Document 2: Japanese Patent Laying-Open No. 63-216188

DISCLOSURE OF THE INVENTION

PROBLEMS TO BE SOLVED BY THE INVENTION

In the matching method using a distance according to the conventional art described above, it has not necessarily been required to perform cumulative addition for calculating a distance, for all components of a feature vector. In matching using similarity, however, a character highest in calculated similarity is produced as a matching result. Therefore, it has not been preferred to perform cumulative addition only for partial elements of a feature vector, in view of matching accuracy.

Namely, in matching processing using a distance above, a method for achieving speedup, such as discontinuing cumulative addition by setting in advance the number of components of the feature vector for which cumulative addition is to be performed or by setting a threshold value, could be applied, however, it has been difficult to apply the method for achieving speedup above to matching processing using similarity.

Therefore, in conventional matching using similarity, in an example of the mesh feature vector in Fig. 18, one feature vector has 64 (8x8) components and 64 operations have been required for calculating a distance for one registered character.

In a language having many characters such as Japanese, the number of registered characters is 3000 or greater and at least 192,000 (64x3000) operations should be performed. In addition, in an example where a dictionary feature vector of one registered character consists of a plurality of feature vectors, a further greater number of operations are required in detailed matching. Moreover, as similarity operation is based on product-sum, time cost required for one operation is higher than the operation of a distance that can be performed only by addition.

Therefore, in matching processing using similarity, a method of quickly determining that there is no possibility of correct answer, that is, a coarse classification method of quickly determining a dictionary registration character not requiring product-sum operation prior to product-sum operation, has been desired.

An object of the present invention is to provide a pattern recognition device capable of more quickly carrying out recognition with high accuracy both in pattern matching based on similarity and pattern matching based on a distance.

MEANS FOR SOLVING THE PROBLEMS

A pattern recognition device according to one aspect of the present invention includes a dictionary unit storing a plurality of dictionary patterns, a dictionary collation vector storage unit, a collation vector generation unit, a vector matching score determination unit, and a collation unit.

The dictionary collation vector storage unit stores a dictionary collation vector in correspondence with each of the plurality of dictionary patterns. The dictionary collation vector consists of a prescribed number of components indicating a feature of the corresponding dictionary pattern, and each component indicates 1 or 0. The collation vector generation unit generates, based on an input pattern, an input collation vector consisting of the prescribed number of components indicating a feature of the input pattern, each component indicating 1 or 0. The vector matching score determination unit calculates a matching score based on an inner product of each dictionary collation vector read from the dictionary collation vector storage unit and the input collation vector. The collation unit collates the input collation vector with the dictionary collation vector for which matching score greater than a prescribed threshold value has been calculated. The pattern recognition device performs pattern matching between the input pattern and only the dictionary pattern corresponding to the dictionary collation vector determined as matching with the input collation vector based on a result of collation.

Preferably, the prescribed threshold value is stored in advance in the dictionary collation vector storage unit for each dictionary collation vector.

Preferably, the matching score indicates a ratio of a value of the inner product of the dictionary collation vector and the input collation vector to the total number of components of the input collation vector indicating 1.

Preferably, the matching score indicates a ratio of a value of the inner product of the dictionary collation vector and the input collation vector to the total number of components of the dictionary collation vector indicating 1.

Preferably, the feature indicates density of an image.

Preferably, the feature indicates density of an image and the component indicates density with 1 and 0, and when the total number of components of the input collation vector indicating 1 is greater than a numeric value set in advance, the matching score indicates a ratio of a value of the inner product of the dictionary collation vector and the input collation vector to the total number of components of the input collation vector indicating 1.

Preferably, the feature indicates density of an image and the component indicates density with 1 and 0. When the total number of components of the input collation vector indicating 1 is equal to or smaller than a numeric value set in advance, the matching score indicates a ratio of a value of the inner product of the dictionary collation vector and the input collation vector to the total number of components of the dictionary collation vector indicating 1.

A pattern recognition method according to another aspect of the present invention is a pattern recognition method using a computer including a dictionary unit storing a plurality of dictionary patterns and a dictionary collation vector storage unit storing a dictionary collation vector consisting of a prescribed number of components indicating a feature of the dictionary pattern in correspondence with each of the plurality of dictionary patterns, each component indicating 1 or 0.

This pattern recognition method includes the steps of: generating, based on an input pattern, an input collation vector consisting of the prescribed number of components indicating a feature of the input pattern, each component indicating 1 or 0; calculating a matching score based on an inner product of each dictionary collation vector read from the dictionary collation vector storage unit and the input collation vector; collating the input collation vector with the dictionary collation vector for which matching score greater than a prescribed threshold value has been calculated; and performing pattern matching between the input pattern and only the dictionary pattern corresponding to the dictionary collation vector determined as matching with the input collation vector based on a result of collation described previously.

According to yet another aspect of the present invention, a pattern recognition program for causing a computer to perform the pattern recognition method described above is provided.

According to yet another aspect of the present invention, a machine-readable recording medium recording a program for causing a computer to perform the pattern recognition method described above is provided.

EFFECTS OF THE INVENTION

According to the present invention, whether an input pattern is similar to a dictionary pattern or not is checked based on a matching score between an input collation vector and a dictionary collation vector consisting of components of which value is indicated by 1 or 0. Here, as a matching score is calculated based on an inner product of the input collation vector and the dictionary collation vector, the matching score can quickly be obtained. In addition, collation can rapidly be performed.

Thus, in pattern recognition, the number of times of similarity operations requiring time is reduced and the input pattern can more quickly be recognized.

BRIEF DESCRIPTION OF THE DRAWINGS

Fig. 1 is a functional configuration diagram of a main part of a character recognition device according to the present embodiment.
Fig. 2 is a configuration diagram of a computer on which the character recognition device according to the present embodiment is mounted.
Fig. 3 is a flowchart of overall processing according to the present embodiment.
Fig. 4 is a flowchart of processing in a feature extraction unit.
Fig. 5 is a diagram showing a mesh area according to the present embodiment.
Figs. 6 (A) to (C) are diagrams showing processing in a collation vector extraction unit.
Fig. 7 is a diagram showing exemplary contents in an input collation vector accumulation buffer.
Figs. 8 (A) and (B) are diagrams showing exemplary overall contents in a dictionary collation vector accumulation buffer.
Fig. 9 is a diagram showing exemplary specific contents in the dictionary collation vector accumulation buffer.
Figs. 10 (A) to (H) are diagrams schematically showing a processing procedure in a collation vector matching score determination unit.
Figs. 11 (A) to (H) are diagrams schematically showing a processing procedure in a threshold value generation unit.
Fig. 12 is a flowchart of processing for generating a value.
Fig. 13 is a diagram showing an exemplary table used by a collation vector extraction unit.
Fig. 14 is a diagram showing an example of a processing procedure in a pattern matching unit.
Fig. 15 is a diagram showing another example of a processing procedure in the pattern matching unit.
Fig. 16 is a diagram showing a procedure for density determination processing.
Fig. 17 is a diagram showing an example of an input character image.
Fig. 18 is a diagram showing a state that the input character image is mesh-divided.
Fig. 19 is a diagram showing each component of a feature vector.
Fig. 20 is a diagram showing dictionary data applied to a conventional example and the present embodiment.
Fig. 21 is a diagram showing an example of a conventional processing procedure.
Fig. 22 is a diagram showing a conventional threshold value table.
Fig. 23 is a diagram showing another example of a conventional processing procedure.

DESCRIPTION OF THE REFERENCE SIGNS

1 character recognition device; 805 feature extraction unit; 811 dictionary data; 813 dictionary collation vector accumulation buffer; 821 pattern matching unit; 822 density determination unit; 823 collation vector extraction unit; 824 collation vector matching score determination unit; 825 input collation vector accumulation buffer; 826 threshold value generation unit; 827 first vector similarity calculation unit; and 828 detailed similarity calculation unit.

BEST MODES FOR CARRYING OUT THE INVENTION

An embodiment of the present invention will be described hereinafter with reference to the drawings.

(First Embodiment)

(Functional Configuration)

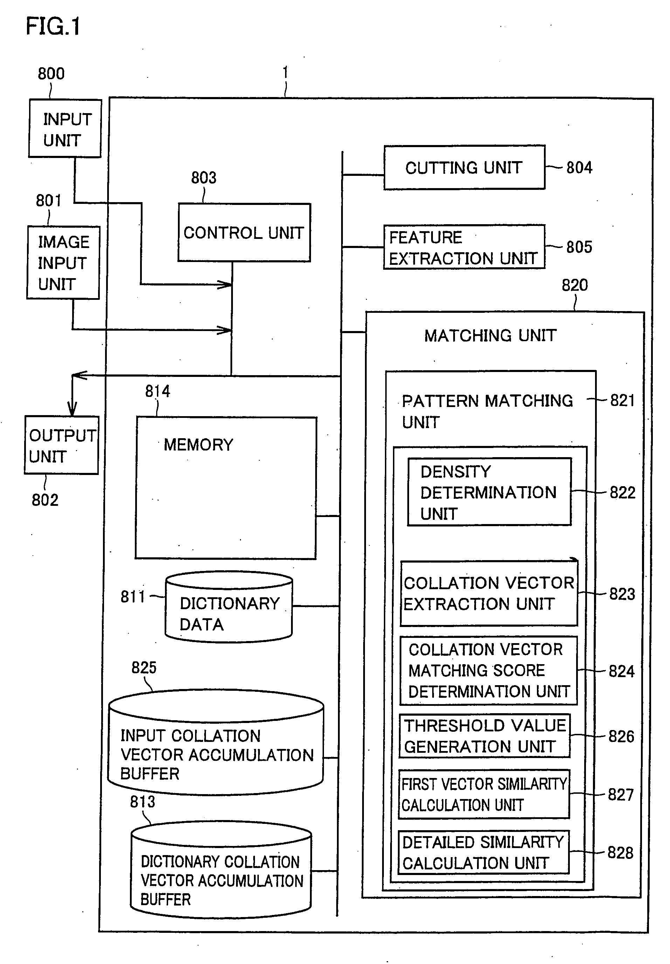

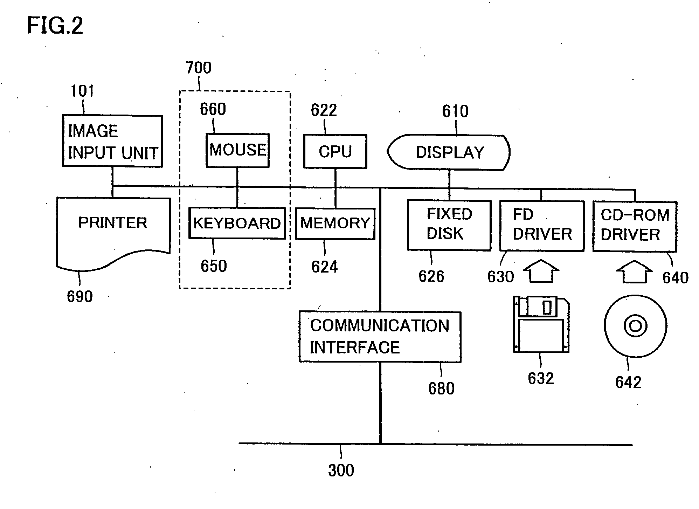

Fig. 1 shows a functional configuration of a main part of a character recognition device 1 according to the present embodiment. Fig. 2 shows a configuration of a computer according to the embodiment.

Fig. 2 is a configuration diagram of the computer on which character recognition device 1 according to the present embodiment is mounted. Referring to Fig. 2, the computer includes an image input unit 101, a display 610 implemented by a CRT (cathode ray tube) or liquid crystal, a CPU (Central Processing Unit) 622 for managing and controlling the computer itself in a concentrated manner, a memory 624 configured to include a ROM (Read Only Memory) or a RAM (Random Access Memory), a fixed disk 626, an FD (Flexible Disk) driver 630 to which an FD 632 is removably attached, for accessing attached FD 632, a CD-ROM (Compact Disc Read Only Memory) driver 640 to which a CD-ROM 642 is removably attached, for accessing attached CD-ROM 642, a communication interface 680 for establishing communication connection between a communication network 300 and the computer, a printer 690, and an input unit 700 having a keyboard 650 and a mouse 660. These units are connected for communication through a bus.

Image input unit 101 has a scanner, which optically reads a character written on a sheet of paper and outputs image data. Alternatively, image input unit 101 has an image pick-up unit such as a camera, which picks up an image of a character written on a sheet of paper and outputs image data.

The computer may be provided with a magnetic tape apparatus to which a cassette type magnetic tape is removably attached, for accessing the magnetic tape.

Referring to Fig. 1, character recognition device 1 is connected to an input unit 800 corresponding to input unit 700, an input unit 801 corresponding to image input unit 101, and an output unit 802 corresponding to printer 690 or display 610. Character recognition device 1 contains a control unit 803 corresponding to CPU 622 or the like, a cutting unit 804 extracting (cutting) data of a character portion from provided image data, a feature extraction unit 805 extracting a feature from a character indicated by the cut character image data, a matching unit 820 performing pattern matching between a dictionary feature vector and an input feature vector, an input collation vector accumulation buffer 825 for storing dictionary data 811 and a vector for collation of the input feature vector, a dictionary collation vector accumulation buffer 813 accumulating a vector for collation of the dictionary feature vector, and a memory 814.

Memory 814 is used as a work area for processing image data, a character pattern or the like, and memory 814 is an area for storing intermediate data or the like obtained during the course of character recognition processing.

Matching unit 820 includes a pattern matching unit 821 performing pattern matching between the dictionary feature vector and the input feature vector. Pattern matching unit 821 includes a density determination unit 822 determining a degree of density of an input pattern, a collation vector extraction unit 823 extracting an input collation vector in accordance with a value of a component of the input feature vector, a collation vector matching score determination unit 824 determining whether the input feature vector is similar to the dictionary feature vector or not, a threshold value generation unit 826, a first vector similarity calculation unit 827, and a detailed similarity calculation unit 828.

Dictionary data 811, a threshold value buffer 812, dictionary collation vector accumulation buffer 813, memory 814, and input collation vector accumulation buffer 825 in Fig. 20 correspond to memory 624, fixed disk 626, FD 632, and CD-ROM 642.

A function of each of cutting unit 804 and feature extraction unit 805 as well as matching unit 820 is implemented by execution of a corresponding program. Namely, a program is stored in advance in memory 624, fixed disk 626, FD 632, CD-ROM 642, and the like, and the corresponding function is implemented by reading and execution of the program by CPU 622. Though it is assumed here that the function of each unit is implemented by the program, the function may be implemented by a circuit in its entirety or in part.

(Matching Processing)

Fig. 20 shows a partial configuration of dictionary data 811 according to the present embodiment.

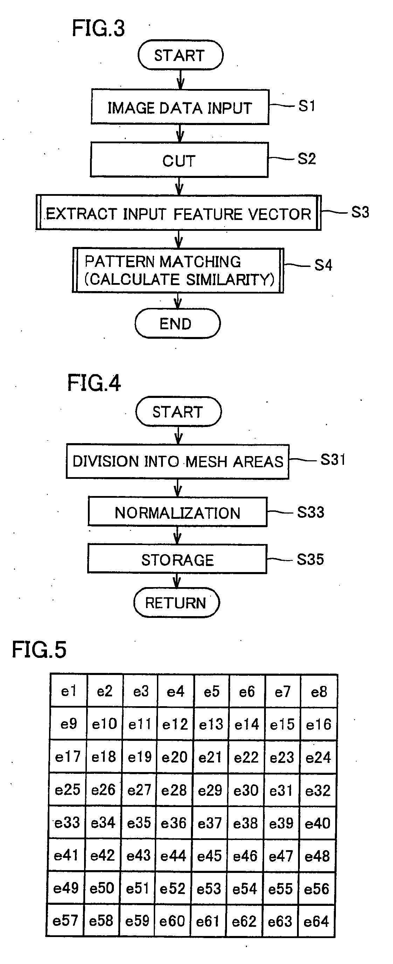

Outlines of matching processing in character recognition device 1 will be described with reference to the flowchart in Fig. 3. The flowchart is stored, for example, in memory 624 as a program, and matching processing proceeds as a result of reading of instructions of the program from memory 624 and execution thereof by CPU 622.

Initially, a user operates image input unit 801 to optically scan a sheet surface (document) on which characters are written or to pick up an image of the sheet surface, so that image input unit 801 obtains input of image data. Image input unit 801 outputs the obtained image data to character recognition device 1. Character recognition device 1 receives the image data output from image input unit 801. The received image data is stored in memory 814 (step S (hereinafter simply abbreviated as S) 1). The image data output from image input unit 801 indicates binarized image data, each pixel of the image having a value of white or black, that is, exhibiting density as a feature.

Cutting unit 804 performs reading the image data stored in memory 814 and cutting processing of the read image data. Namely, cutting unit 804 cuts from the image data, the image data corresponding to the character as character pattern (input pattern) data. The cut character pattern data refers to rectangular pattern data (S2). The character pattern data (hereinafter referred to as the character pattern) is cut, for example, in accordance with a procedure shown in Japanese Patent Laying-Open No. 63-216188. Namely, a black pixel is extracted from input image data and a row of the character in the input image is distinguished based on the extracted black pixel. Thereafter, the character pattern is cut in accordance with a histogram of the black pixel in a direction perpendicular to the distinguished row. Here, for example, it is assumed that the character pattern in Fig. 17 has been cut. The character pattern in Fig. 17 consists of a character area including black pixels and a background area of the character including white pixels. The character pattern cut by cutting unit 804 is stored in memory 814.

Feature extraction unit 805 reads the character pattern from memory 814 and extracts the feature of the character pattern from the read character pattern. The feature is extracted as the input feature vector (S3). Thereafter, pattern matching (S4) is performed. Fig. 4 shows details of a procedure for extracting the input feature vector.

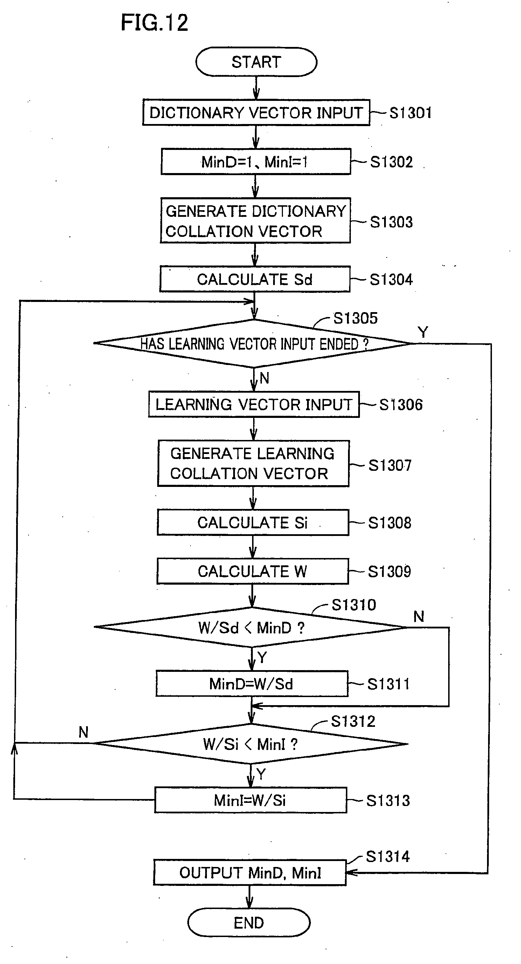

Referring to Fig. 4, feature extraction unit 805 divides the rectangular area of character pattern read from memory 814, such as the character pattern in Fig. 17, into a plurality of mesh areas in the work area of memory 814 (S31). Here, the rectangular character pattern is divided into equal 64 or 8×8 square areas as shown in Fig. 12. In the present embodiment, 64 areas resulting from division into equal parts are sequentially denoted as areas e1, e2, e3, ..., and e64, from the upper left end to the lower right end of the rectangular area of the character pattern as shown in Fig. 5.

In addition, feature extraction unit 805 counts the number of pixels indicating the character area (black pixels) among pixels included in each of 64 areas resulting from division into equal parts, which is in turn subjected to normalization such that the sum of squares of the number of counted black pixels in each area is constant (S33). Normalization is carried out such that the sum of squares of component values constantly attains, for example, to 65536.

The input feature vector output from feature extraction unit 805 has 64 normalized components. Each component indicates the number of normalized black pixels. The extracted input feature vector is stored in memory 814 (S35). Thereafter, the process proceeds to step S4 in Fig. 3.

Here, normalization refers to a process of calculating a value of square of the number of black pixels counted for each of 64 areas, calculating, for all of 64 areas, the sum of the calculated values of squares of the number of black pixels in each area, and adjusting each component of the input feature vector such that the sum attains to a prescribed value. As a result of normalization, if the input character pattern is "A" of the same font (typeface), the input feature vector of the character pattern of 32 pixels × 32 pixels and the input feature vector of the character pattern of 64 pixels × 64 pixels both indicate a vector of the same value. Thus, the same character of the same font will have the same input feature vector to be compared with a dictionary vector, whether the size of the character is large or small.

Pattern matching unit 821 reads the input feature vector from memory 814 and performs pattern matching processing by using the read input feature vector and dictionary feature vector VTj stored in advance in dictionary data 811 (S4). Namely, pattern matching unit 821 performs pattern matching processing between the input character and the dictionary registration character by using the input feature vector and dictionary feature vector VTj read from dictionary data 811.

A function of each unit for such pattern matching processing will be described.

(First Vector Similarity Calculation Unit)

A specific procedure for similarity calculation by first vector similarity calculation unit 827 is as follows. Specifically, with regard to the input character pattern and the character pattern of dictionary registration character CHi, first vector similarity calculation unit 827 multiplies a ratio of black pixels in an area ex (x = 1, 2, 3, ..., and 64) by a ratio of black pixels in a corresponding area, among 64 mesh-divided areas in Fig. 5. Namely, a value of a component among 64 components constituting the input feature vector is multiplied by a value of a corresponding component among 64 components constituting dictionary feature vector VTi. Then, all values indicating results of multiplication for 64 areas el to e64 (64 components) in Fig. 5 are added. This result of addition indicates similarity.

When first vector similarity calculation unit 827 calculates similarity, pattern matching unit 821 initially performs rough matching with regard to first feature vector VT1 in each dictionary feature vector group VEi. Thus, 64 operation results (multiplication values) are obtained. Then, for each dictionary registration character CHi corresponding to first feature vector VT1 having a multiplication value greater than a prescribed threshold value, operation with regard to corresponding second feature vector VT2 to mth feature vector VTm is performed. A recognition result is output based on a result of the operation.

(Collation Vector Extraction Unit)

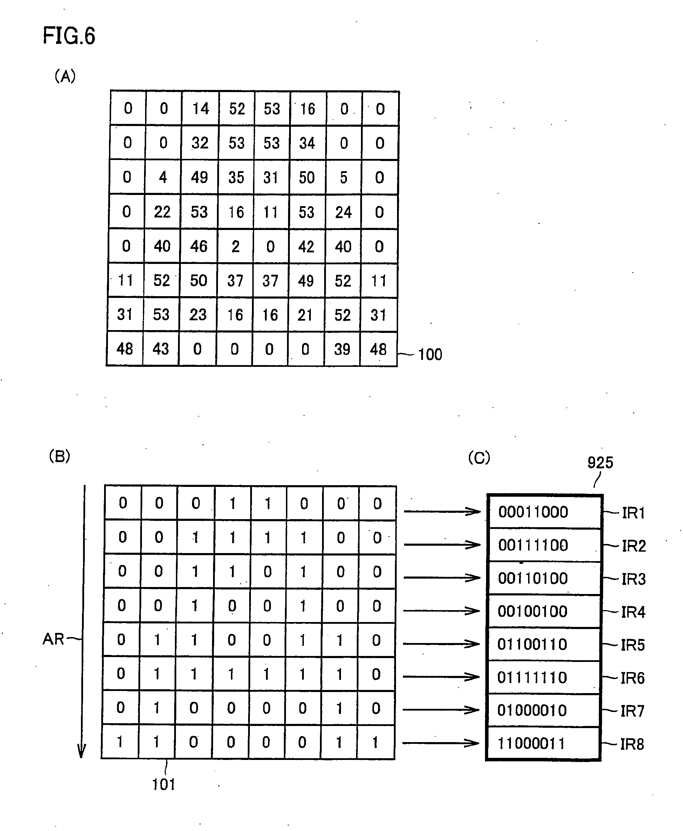

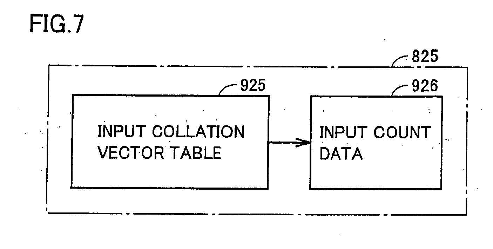

Collation vector extraction unit 823 will be described with reference to Figs. 6 (A) to (C). Collation vector extraction unit 823 generates, for example, an input collation vector 101 in Fig. 6 (B) from an input feature vector 100 in Fig. 6 (A), and thereafter generates a collation vector table 925 in Fig. 6 (C) based on generated input collation vector 101. Generated input collation vector table 925 is stored in input collation vector accumulation buffer 825 in Fig. 7.

Specifically, collation vector extraction unit 823 reads input feature vector 100 in Fig. 6 (A) from memory 814. Then, a value of each of 64 components of read input feature vector 100 is compared with a prescribed threshold value (here, the prescribed threshold value is assumed as 32). Input collation vector 101 is generated based on a result of comparison. Here, the prescribed threshold value refers to a threshold value for classifying components of the feature vector into a component having a higher value and a component having a lower value. As described previously in connection with normalization, the sum of squares of values of the components is 65536 here. Therefore, if it is assumed that all components indicate the same value, the value of each component indicates 32. Namely, $32 \times 32 \times 64 = 65536$, and hence 32 is adopted as the prescribed threshold value here. Thus, the prescribed threshold value is determined by the value of the sum obtained in normalization. Therefore, the prescribed threshold value is not limited to 32.

Initially, collation vector extraction unit 823 generates a vector consisting of 64 components, which is referred to as a generated vector. Here, the value of each component of the generated vector is set, for example, to "0". Thereafter, based on the result of comparison described above, only the value of the component of the generated vector having a value determined as greater than the prescribed threshold value (=32) among 64 components of input feature vector 100 in Fig. 6 (A) is set to "1" (the value of the component of the generated vector corresponding to the component having a value determined as being not higher than the prescribed threshold value remains at "0"). Thus, the generated vector indicates input collation vector 101 having 64 components to which either a value "1" or "0" is allocated, as shown in Fig. 6 (B). Generated input collation vector 101 is once stored in memory 814.

In addition, collation vector extraction unit 823 reads input collation vector 101 in Fig. 6 (B) from memory 814 and sequentially extracts, row by row, values of 64 components of read input collation vector 101 as a bit column, as shown with an arrow AR in Fig. 6 (B). Therefore, the total of 8 bit columns are extracted. Each extracted bit column has a length of 8 bits. Thereafter, collation vector extraction unit 823 generates input collation vector table 925 in Fig. 6 (C) storing 8 bit columns in accordance with the order of extraction from input collation vector 101. Generated input collation vector table 925 is stored in input collation vector accumulation buffer 825.

Input collation vector table 925 stores 8 bit columns as a record IRk (k = 1, 2, 3, 4, 5, 6, 7, and 8) in accordance with the order of extraction from input collation vector 101. In addition, collation vector extraction unit 823 counts the number of components of which value indicates "1" among 64 components of generated input collation vector 101, that is, the total number of components of which value is greater than the prescribed threshold value among 64 components, and stores a count value in input collation vector accumulation buffer 825 as input count data 926. In an example in Fig. 6 (B), input count data 926 indicates "27".

(Dictionary Collation Vector Accumulation Buffer)

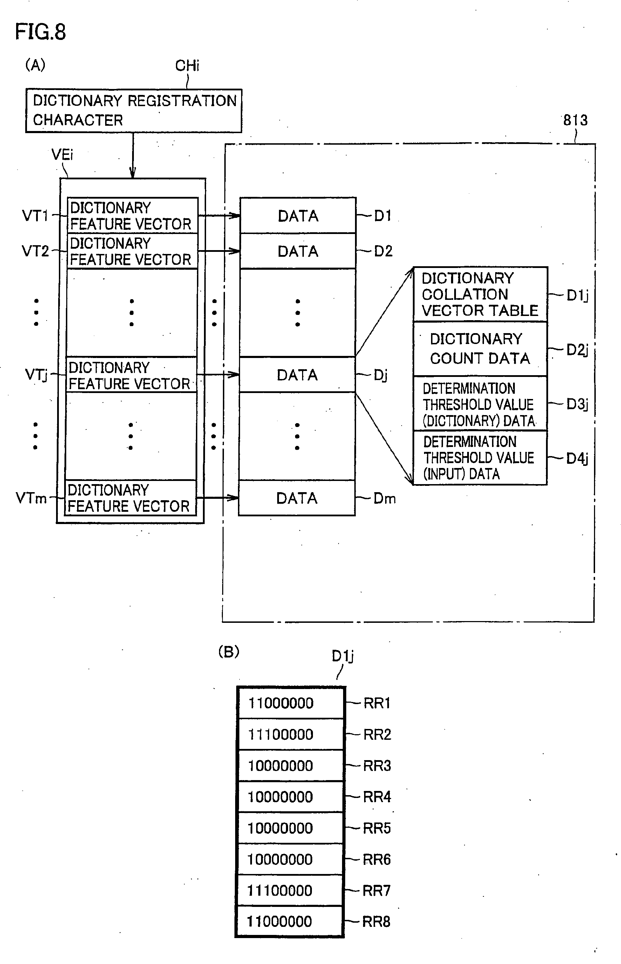

Figs. 8 (A) and (B) show exemplary contents in dictionary collation vector accumulation buffer 813. In the present embodiment, for each dictionary registration character CHi in dictionary data 811 as well, a dictionary collation vector table D1j corresponding to input collation vector table 925 and dictionary count data D2j corresponding to input count data 926 are calculated for corresponding dictionary feature vector VTj, as in the case of input feature vector 100, and calculated values of the former are stored in dictionary collation vector accumulation buffer 813 in association with each other.

Dictionary collation vector accumulation buffer 813 stores in advance data Dj associated with dictionary feature vector VTj corresponding to dictionary registration character CHi in dictionary data 811, as shown in Fig. 8 (A). Referring to Fig. 8 (A), data Dj has dictionary collation vector table D1j calculated for associated dictionary feature vector VTj, dictionary count data D2j, determination threshold value (dictionary) data D3j, and determination threshold value (input) data D4j. Determination threshold value (dictionary) data D3j and determination threshold value (input) data D4j will be described later. Fig. 8 (B) shows exemplary dictionary collation vector table D1j. Dictionary collation vector table D1j has 8 records RRk (k = 1, 2, 3, ..., and 8) of a length of 8 bits, as in the case of input collation vector table 925.

For example, when character recognition device 1 is turned on and dictionary data 811 is loaded, data Dj may be calculated based on loaded dictionary data 811 and stored in dictionary collation vector accumulation buffer 813.

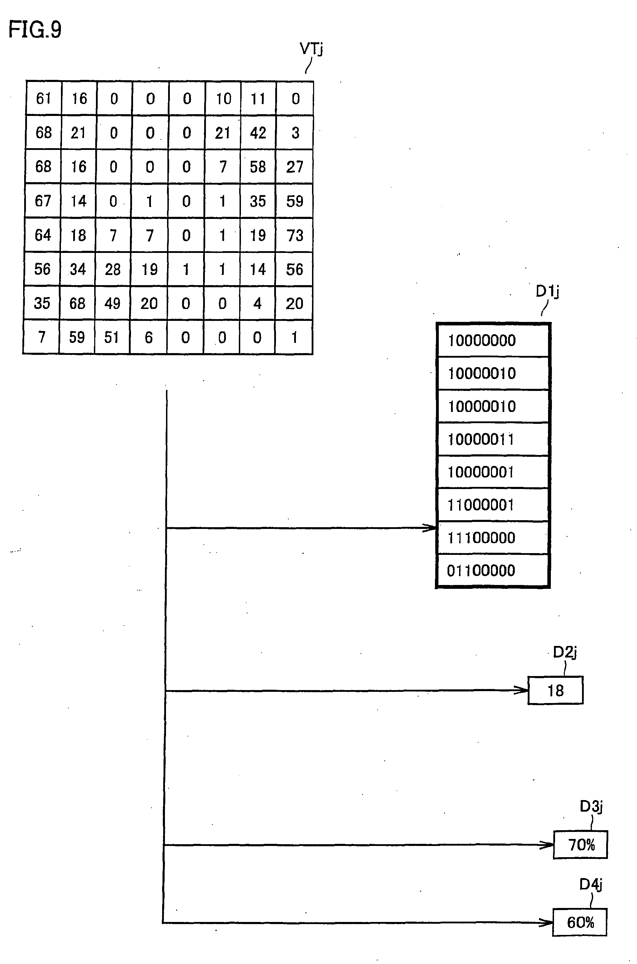

Fig. 9 shows exemplary specific contents in dictionary collation vector accumulation buffer 813. For example, in the case of dictionary feature vector VTj in Fig. 9, collation vector extraction unit 823 calculates dictionary collation vector table D1j and dictionary count data D2j in Fig. 9, that in turn are stored. In addition, threshold value (dictionary) data D3j for determining a matching score based on the number of components having "1" in dictionary collation vector table D1j and threshold value (input) data D4j for determining a matching score based on the number of components of input collation vector 101 indicating "1" are calculated and stored.

(Collation Vector Matching Score Determination Unit)

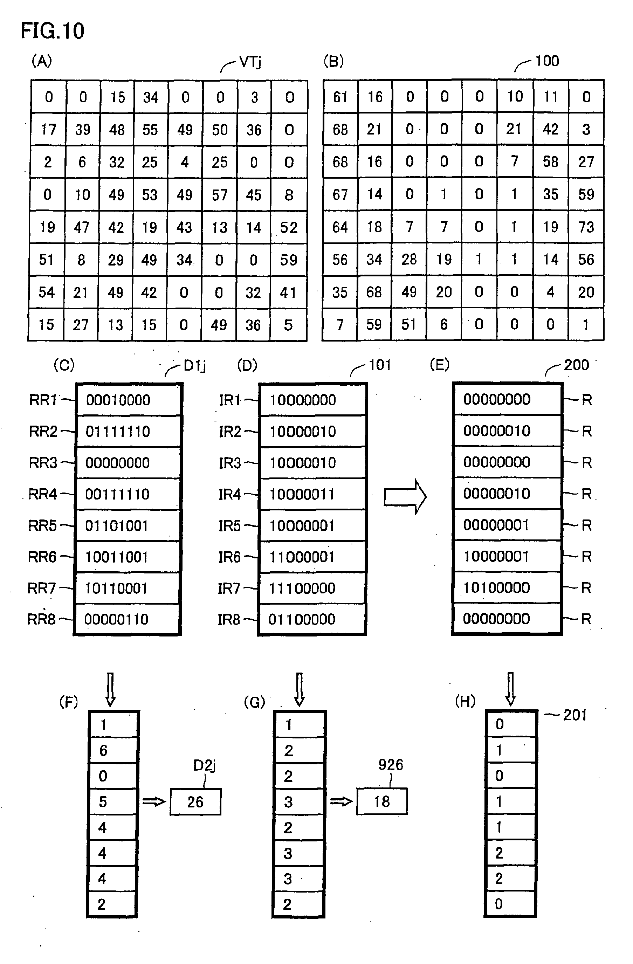

Collation vector matching score determination unit 824 will now be described. Figs. 10 (A) to (H) schematically show a processing procedure in collation vector matching score determination unit 824. It is assumed here that collation vector extraction unit 823 calculates dictionary collation vector table D1j and input collation vector table 101 in Figs. 10 (C) and (D) and dictionary count data D2j and input count data 926 in Figs. 10 (F) and (G), from dictionary feature vector VTj and input feature vector 100 in Figs. 10 (A) and (B), respectively.

Collation vector matching score determination unit 824 generates data to be used for determination. Namely, a logical product of 8-bit data of record IRk of input collation vector table 101 and 8-bit data of record RRk of dictionary collation vector table D1j is calculated bit by bit. The logical product of data of record IRk and data of record RRk is calculated until the value of a variable k is sequentially incremented from 1 to 8. Thus, logical product data 200 shown in Fig. 10 (E) including 8 records R storing the logical sum (8-bit data) of records IRk and RRk is obtained. Logical product data 200 is temporarily stored in memory 814.

Collation vector matching score determination unit 824 then reads data of each record R of logical product data 200 in memory 814 and counts the total number of bits indicating "1" among 8 bits indicated by the read data. The obtained total number indicates an inner product value 201 (see Fig. 10 (H)) of dictionary collation vector VTj and input collation vector 100. Here, inner product value 201 indicates "7". Calculated inner product value 201 is stored in memory 814. Details of determination of a matching score by collation vector matching score determination unit 824 will be described later.

In making comparison between dictionary collation vector table D1j generated from dictionary vector VTj, in which a value of each component is either 0 or 1, and input collation vector table 101 generated from input feature vector 100 by using the threshold value the same as in dictionary collation vector table D1j, in which a value of each component is either 0 or 1, if two characters are of the same type, a degree of matching of locations of components of which value indicates "1" in both tables is high, and hence the value of inner product value 201 becomes greater. Therefore, a greater value of inner product value 201 could indicate a higher degree of matching between the pattern of the input character and the pattern of dictionary registration character CHi.

(Threshold Value Generation Unit)

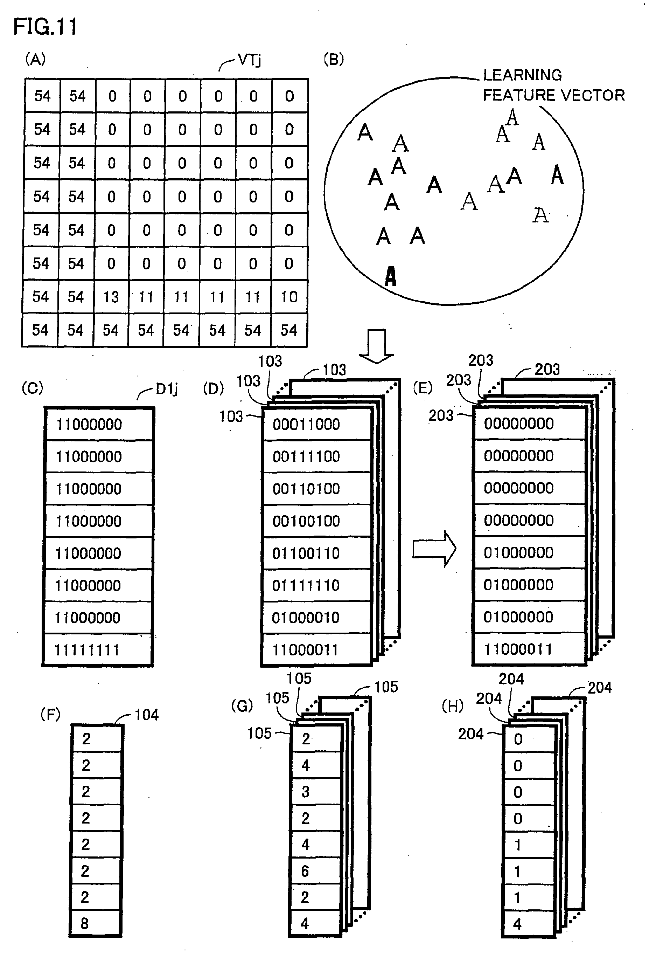

The method of generation of a threshold value for determining a matching score based on the total number of components of the input collation vector of which value indicates "1" and the method of generation of a threshold value for determining a matching score based on the total number of components of the dictionary collation vector of which value indicates "1" by threshold value generation unit 826 will be described with reference to Figs. 11 (A) to (H).

Description will be given, using a character "A" as an example. In accordance with the method described previously, dictionary feature vector VTj (see Fig. 11 (A)) of dictionary registration character CHi indicating "A" and dictionary collation vector table D1j (see Fig. 11 (C)) are stored in advance in dictionary collation vector accumulation buffer 813. In addition, for a learning feature vector generated from a character pattern for each different type of font of "A" as shown in Fig. 11 (B), a learning collation vector table 103 in Fig. 11 (D) is generated in advance. Thereafter, a logical product 203 (see Fig. 11 (E)) of dictionary collation vector table D1j of "A" is calculated for each of created learning collation vector table 103, and an inner product value 204 in Fig. 11 (H) is calculated for each logical product 203.

In addition, a ratio RL of inner product value 204 corresponding to each learning collation vector to total number 104 of components of the dictionary collation vector indicating "1" (Fig. 11 (F)) and a ratio RD of inner product value 204 of the learning collation vector to total number 105 of components of the learning collation vector indicating "1" are calculated. In Fig. 11 (F), total number 104 indicates "22". In Fig. 11 (G), total number 105 indicates "27". In Fig. 11 (H), inner product value 204 indicates "7". Therefore, here, ratio RL is calculated as 0.318 and ratio RD is calculated as 0.259.

Ratio RL and ratio RD for all learning feature vectors in Fig. 11 (B) are calculated. A minimum value of ratio RL is defined as a threshold value MinI for determining a matching score based on the total number of components of the input collation vector of "A" indicating "1" and a minimum value of ratio RD is defined as a threshold value MinD for determining a matching score based on the total number of components of the dictionary collation vector of "A" indicating "1". Calculated matching score determination threshold values MinI and MinD are stored in dictionary collation vector accumulation buffer 813 in Fig. 8 (A), as determination threshold value data D3j and D4j corresponding to dictionary feature vector VTj.

Fig. 12 is a flowchart of processing for generating two threshold values for one dictionary feature vector VTj, that is, threshold value MinD (determination threshold value data D3j) for determining a matching score based on the total number of components of the dictionary collation vector indicating "1" and threshold value MinI (determination threshold value data D4j) for determining a matching score based on the total number of components of the input collation vector indicating "1", performed by threshold value generation unit 826.

Initially, threshold value generation unit 826 inputs dictionary feature vector VTj by reading dictionary feature vector VTj, for which threshold value should be generated, from dictionary data 811 (S1301). A threshold value (MinD, MinI) to be detected is set to a maximum value "1" (=100%) as an initial value (S 1302). Dictionary collation vector table D1j is generated from input dictionary feature vector VTj (S1303). Thereafter, total number Sd of components exceeding the threshold value (=32) in generated dictionary collation vector table D1j is calculated (S1304).

Thereafter, whether or not there is feature vector data that has been learned but not yet been used for generating a threshold value is determined (S 1305). When there is such feature vector data, one piece of learning feature vector data (hereinafter referred to as a learning feature vector) is input (S1306). Here, a plurality of learning feature vectors obtained as a result of learning are stored in advance in memory 814. Therefore, as a result of reading from memory 814, the learning feature vector is input.

Thereafter, learning collation vector table 103 is generated from the input learning feature vector (S1307), and total number Si of components exceeding the threshold value (=32) in generated learning collation vector table 103 is calculated (S1308).

Thereafter, dictionary collation vector table D1j is read from dictionary collation vector accumulation buffer 813, and an inner product value W indicating inner product value 204 of read dictionary collation vector table D1j and generated learning collation vector table 103 is calculated (S1309).

Then, a ratio of total number Sd to inner product value W (W/Sd) is compared with threshold value MinD, and based on the result of comparison, whether the ratio (W/Sd) is smaller than threshold value MinD or not is determined (S1310). When determination as smaller is not made, the process proceeds to step S1312. On the other hand, when determination as smaller is made, the ratio (W/Sd) is set as threshold value MinD (S 1311) and the process proceeds to step S 1312.

In step S 1312, a ratio of total number Si to inner product value W (W/Si) is compared with threshold value MinI, and based on the result of comparison, whether the ratio (W/Si) is smaller than threshold value MinI or not is determined. When determination as smaller is not made, the process proceeds to step S1305. On the other hand, when determination as smaller is made, the ratio (W/Si) is set as threshold value MinI (S1313) and the process proceeds to step S305.

The processing in steps S 1306 to S1313 is repeated for each of all learning feature vectors stored in memory 814. When it is determined that processing for all learning feature vectors has ended ("Y" in S1305), threshold values MinD and MinI at that time point are output. Namely, output threshold values MinD and MinI are stored in dictionary collation vector accumulation buffer 813 as determination threshold value data D3j and D4j corresponding to dictionary feature vector VTj (S1334). As described above, processing for generating a matching score determination threshold value ends.

The learning vector used here is a large amount of data identical in a character type to dictionary feature vector VTj. The processing for generating a matching score determination threshold value in Fig. 12 is performed for all dictionary feature vector data VTj of all dictionary registration characters CHi in dictionary data 811.

Here, the reason why smallest threshold values MinD and MinI calculated based on the learning vector are employed as matching score determination threshold value data D3j and D4j of each feature vector VTj of dictionary registration character CHi is as follows.

Namely, as described previously, if the character type is the same, a degree of matching between dictionary feature vector VTj and input feature vector 100 of locations of the components of both vectors, of which value indicates "1", should be high. For example, a degree of matching between dictionary collation vector table D1j of a character "J" and input collation vector table 101 of an input character "L" of locations indicating "1" should be low. In contrast, a degree of matching between dictionary collation vector table D1j of "L" and input collation vector table 101 of "L" of locations indicating "1" should be high. The degree, however, is different depending on data, and it is difficult to determine the degree. Therefore, as a clue, in Fig. 12, a probability of matching, that is, a probability of matching between the dictionary feature vector and the learning vector, is calculated from learning data.

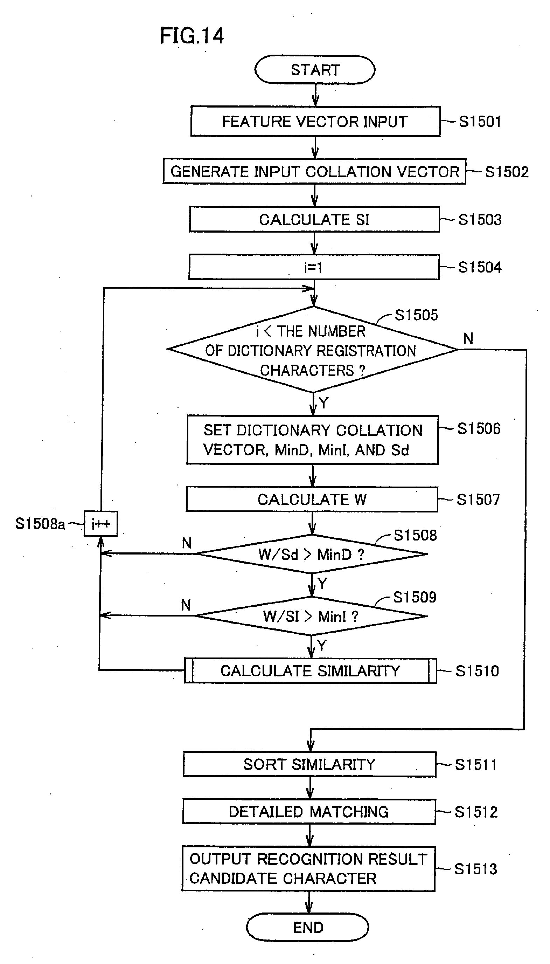

Therefore, when matching score determination threshold value data D3j and D4j are set to the minimum value in the processing in Fig. 12, all learning data can be covered. Speaking with regard to the learning data, calculation of similarity in pattern matching processing in Fig. 14 (calculation of similarity to a first dictionary vector) which will be described later and detailed matching (calculation of similarity to a second dictionary vector) (S1510 and S1512) will not erroneously be skipped. For such reasons, the minimum value is given by way of example. Naturally, a value other than the minimum value may be employed, however, a greater value will lead to lower accuracy, although pattern matching processing is earlier.

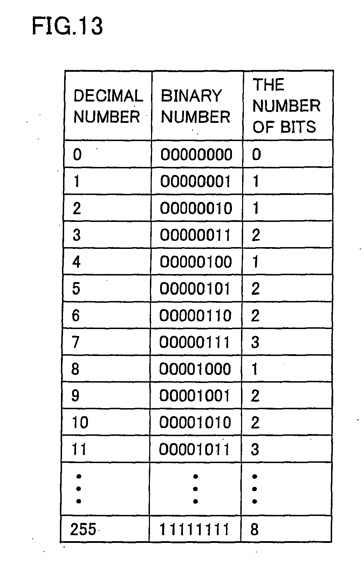

Fig. 13 shows a table used for calculating the total number (dictionary count data D2j or input count data 926) of components of which value indicates "1" in the collation vector table (dictionary collation vector table D1j, input collation vector table 101 or the like) in collation vector extraction unit 823. The table in Fig. 13 stores a value represented by a binary number and the number of bits of which value represented by the binary number indicates "1", in correspondence with a value represented by a decimal number (0 to 255). The table is stored in advance in memory 814.

For example, when the value of the component of the record (record RRk or IRk) in the collation vector table indicates 00000101 (5 of the decimal number), the table in Fig. 13 is searched for the number of bits corresponding to "5" of decimal number, and "2" is obtained. The table in Fig. 13 is searched in accordance with such a procedure, so that the number of components (the number of bits) exceeding the threshold value for each record in the collation vector table can be obtained. The sum of the number of bits thus obtained can be found, that is, the total number of components indicating "1" can quickly be obtained by performing addition only seven times.

(Pattern Matching Processing)

Fig. 14 shows a processing procedure in pattern matching unit 821.

It is assumed that, for example, input feature vector 100 in Fig. 6 (A) generated by feature extraction unit 805 is input to pattern matching unit 821 of matching unit 820 (S1501). Collation vector extraction unit 823 generates input collation vector 101 based on input feature vector 100 (S1502), and calculates (counts) total number SI of components of input collation vector 101 indicating "1" (S1503). Thus, input collation vector table 925 and input count data 926 corresponding to total number SI are stored in input collation vector accumulation buffer 825.

Pattern matching unit 821 sets a counter i for counting dictionary registration characters CHi read from dictionary data 811 and used for pattern matching to 1 (S1504) and determines whether matching has been performed as many times as the number of dictionary registration characters or not (S 1505). In Fig. 20, the total number of dictionary registration characters CHi is n. As pattern matching unit 821 is provided in advance with data indicating n, the value indicated by counter i is compared with the number of registered dictionary characters (n), and based on the result of comparison, whether a condition of "i < n (the number of registered dictionary characters)" is satisfied or not is determined. Thus, whether matching has been performed as many times as the number of dictionary registration characters or not is determined.

When the condition of "i < n (the number of registered dictionary characters)" is satisfied and it is determined that matching for all dictionary registration characters has not yet been completed (Y in S 1505), similarity calculation (S 1510) which will be described later with regard to first dictionary feature vector VT1 corresponding to dictionary registration character CHi is permitted. Prior to that processing, however, processing using collation vector matching score determination unit 825 for determining whether first dictionary feature vector VT1 is qualified for calculation of similarity (S 1510) or not is performed (S 1506 to S 1509).

Initially, collation vector matching score determination unit 825 reads a dictionary collation vector table D11 corresponding to dictionary feature vector VT1, threshold value data D31 and D41 corresponding to threshold values MinD and MinI, and dictionary count data D21 corresponding to total number Sd of components indicating "1" in dictionary collation vector table D11 from collation vector accumulation buffer 813 (S1506).

Thereafter, collation vector matching score determination unit 825 calculates inner product value W of input collation vector table 925 read from input collation vector accumulation buffer 825 and dictionary collation vector table D11 (S1507). Then, depending on whether the matching score between input collation vector table 101 and dictionary collation vector table D11 exceeds a prescribed threshold value (MinD, MinI) or not, whether to select dictionary registration character CHi as a candidate for an input character recognition result or not is determined. When dictionary registration character CHi is selected, calculation of similarity in step S 1510 is performed for that dictionary registration character CHi. Collation vector matching score determination unit 825 specifically calculates ratio W/Sd of inner product value W to total number Sd, and compares ratio W/Sd with the value of threshold value data D31 (corresponding to threshold value MinD). When it is determined that a condition of (W/Sd > MinD) is satisfied based on the result of comparison ("Y" in S1508), the process proceeds to next determination processing (S 1509). On the other hand, when it is determined that the condition is not satisfied ("N" in S 1508), it is determined that input feature vector 100 is not at all similar to this dictionary feature vector VT1. In such a case, calculation of similarity by first vector similarity calculation unit 827 (S1510) is not carried out but the value of counter i is incremented by 1. Thus, next dictionary registration character CHi is indicated (S 1508). Thereafter, the process returns to the processing in step S1505 and the processing in S1506 and subsequent steps is similarly performed for next indicated dictionary registration character CHi.

On the other hand, when collation vector matching score determination unit 825 determines that the condition of (W/Sd > MinD) is satisfied ("Y" in S1508), ratio W/SI of inner product W to total number SI is calculated. Then, ratio W/SI is compared with the value of threshold value data D32 (corresponding to threshold value MinI). When it is determined that a condition of (W/SI > MinI) is satisfied based on the result of comparison ("Y" in S 1509), similarity is calculated (S1510). When it is determined that the condition of (W/SI > MinI) is not satisfied ("N" in S 1509), it is determined that input feature vector 100 is not at all similar to current dictionary feature vector VT 1. In such a case, calculation of similarity (S1510) is not carried out but the value of counter i is incremented by 1 (S 1508a) so that next dictionary registration character CHi is indicated. Thereafter, the processing in S 1505 and subsequent steps is similarly performed for corresponding feature vector VT 1.

The processing above is performed until determination that the condition in S 1505 is satisfied is made (N in S1505). Namely, the processing is performed for all dictionary registration characters CHi in dictionary data 811. Therefore, calculation of similarity (S 1510) is carried out for only x dictionary registration characters CHi among n dictionary registration characters CHi in dictionary data 811, of which dictionary feature vector VT1 satisfies the conditions in S 1508 and S1509.

First vector similarity calculation unit 827 calculates similarity between input collation vector 101 and first feature vector VT1 of each of x dictionary registration characters CHi, in accordance with the procedure described previously. Here, calculated similarity is stored in memory 814 as x similarities R1, R2, R3, ..., and Rx, in association with corresponding dictionary registration characters CHi in dictionary data 811, by using a pointer or the like.

Thereafter, pattern matching unit 821 sorts x similarities R1, R2, R3, ..., and Rx in memory 814 (S1511). Then, based on the result of sorting, dictionary registration characters CHi corresponding to top P high similarities are read from dictionary data 814 and detailed similarity calculation unit 828 performs detailed matching (S1512). Based on the result of detailed matching, a candidate character for a recognition result is output to output unit 802 or the like (S1513).

In the present embodiment, detailed matching (S1512) is performed, for example, in the following manner. Specifically, detailed similarity calculation unit 828 performs operation of similarity to second dictionary feature vector VT2 to mth dictionary feature vector VTm, for each dictionary registration characters CHi corresponding to top P similarities described above. Namely, for each of P dictionary registration characters CHi, similarity between each of second dictionary feature vector VT2 to mth dictionary feature vector VTm corresponding to that dictionary registration character CHi and input feature vector 101 is calculated. Calculation of similarity refers to calculation of similarity S in accordance with Equation 2 described previously. The sum of similarities calculated for respective dictionary feature vectors is calculated, for each of P dictionary registration characters CHi. Then, dictionary registration character CHi is selected from among P dictionary registration characters CHi in descending order of magnitude of the sum of corresponding similarities, and selected dictionary registration character CHi is read from dictionary data 811 as a candidate indicating a recognition result. Read dictionary registration character CHi is provided to output unit 802. Thus, in step S1513, output unit 802 displays a character based on a character code indicated by dictionary registration character CHi input as the candidate for the recognition result.

Therefore, detailed similarity calculation unit 828 performs pattern matching between the input pattern (input feature vector 101) and only the dictionary pattern (second dictionary feature vector VT2 to mth dictionary feature vector VTm). This dictionary pattern refers to a dictionary pattern (second dictionary feature vector VT2 to mth dictionary feature vector VTm) corresponding to dictionary feature vector VT1 determined as matching with input feature vector 101 based on the result of collation by first vector similarity calculation unit 827 described previously.

Here, collation vector matching score determination unit 824 makes determination by using two pieces of threshold value data D3j and D4j set for each dictionary registration character CHi, however, it may employ a fixed value such as 0.5.

In the processing in Fig. 14, as a minimum value out of values calculated from learning data is set as matching score determination threshold value data D3j and D4j, all character patterns expected to be input as dictionary registration character CHi can be covered. Therefore, in the pattern matching processing in Fig. 14, calculation of similarity (calculation of similarity to the first dictionary vector) and detailed matching (calculation of similarity to the second dictionary vector) (S 1510 and S 1512) will not erroneously be skipped. Consequently, the result of pattern matching processing can highly be accurate.

When it is not necessary to set a minimum value, for example, when accuracy is not required, matching score determination threshold value data D3j and D4j may be adjusted and a great value may be set therefor. For example, when priority is placed on a higher speed, it is not necessarily required to set a minimum value.

(Another Example of Matching Processing)

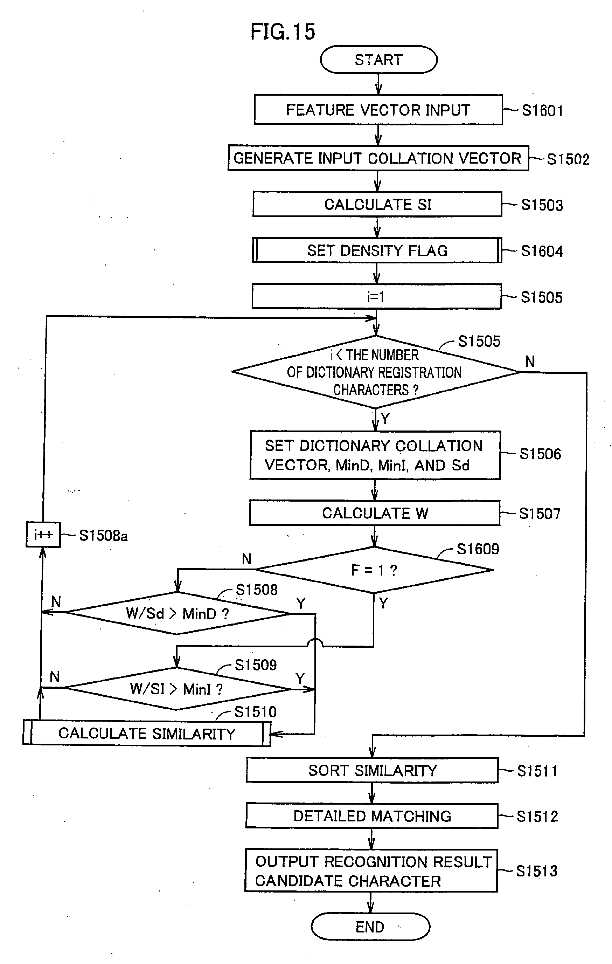

Fig. 15 shows a processing procedure in an example where processing in density determination unit 822 (S1604, S1609) is added to the processing in the matching unit in Fig. 14. As the processing in Fig. 15 except for S1604 and S1609 is otherwise the same as that described in connection with Fig. 14, detailed description will not be provided.

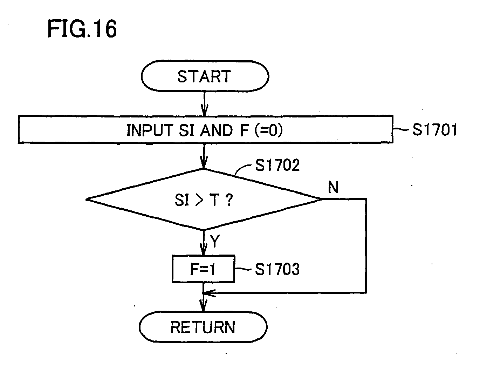

A density flag "F" is referred to for the processing in density determination unit 822. A procedure for setting density flag "F" will be described with reference to Fig. 16.

Density determination unit 822 determines density as shown in Fig. 16. Initially, total number SI of components indicating "1" in input collation vector table 101 1 and a value of density flag "F" are input. Here, density flag "F" is input as "0" (S1701). Thereafter, density determination unit 822 compares a predetermined threshold value T with the value of total number SI, and determines whether a condition of (SI > T) is satisfied or not based on the result of comparison (S 1702). When it is determined that the condition is satisfied, that is, when it is determined that total number SI is greater than threshold value T ("Y" in S1702), density flag "F" is set to "1" (S1703). On the other hand, when it is determined that the condition is not satisfied ("N" in S 1702), the value of density flag "F" remains at "0". Thus, the processing in density determination unit 822 ends. Namely, density determination unit 822 sets density flag "F" to "1" when there are many black pixels in the input character pattern.

As density determination should produce a determination result that an image, from which an input feature vector to be processed is derived, is blackish or whitish, a value comparable to approximately one third or half (20 to 30) of the total number (64) of vector components is preferably employed as threshold value T.

It is noted that density determination may be made based on total number SI of components indicating "1" in input collation vector table 101 as shown in Fig. 16 or based on the value of the component of input feature vector 100. By making density determination based on the input feature vector without using input collation vector table 101, determination can be made based on a threshold value different from the threshold value used in creating the input collation vector table.

Referring to Fig. 15, the processing in steps S1501 to S 1503 is performed as in Fig. 14. Thereafter, density determination unit 822 sets a value for density flag "F" by using total number SI calculated in S1503 as shown in Fig. 16 (S1604). Thereafter, the processing in S1505 to S1507 is performed as in Fig. 14.

Thereafter, whether the value of density flag "F" indicates "1" or not is determined (S1609). When it is determined that density flag "F" indicates "1" ("Y" in S1609), determination based on matching score determination threshold value MinI is made (S1509). When it is determined that density flag "F" indicates "0" ("N" in S 1609), determination based on matching score determination threshold value MinD is made (S 1508). The subsequent processing is performed as in Fig. 14.

The following advantages are obtained in accordance with the processing procedure in Fig. 15. Specifically, in the procedure in Fig. 14, determination as to whether similarity calculation (S1511) is to be performed or not is made based only on two threshold values of matching score determination threshold values MinD and MinI. Therefore, regardless of the contents in the input pattern, comparison processing (S 1508) based on threshold value MinD is performed without exception. On the other hand, in employing density determination unit 822 as in Fig. 15, it is more likely that an input pattern including many dense pixels (character areas), that is, an input pattern having a large value of total number SI, is excluded from similarity calculation (S 1510) through determination processing in step S1509. Attention being paid to this fact, in the procedure in Fig. 15, determination processing based on threshold value MinD in step S1508 can be skipped based on density flag "F", and only determination processing based on threshold value MinI in S 1509 can be performed. Therefore, the processing can be completed more quickly than in the procedure in Fig. 14.

(Second Embodiment)

A second embodiment will now be described.

A system having a processing function described in the first embodiment is implemented by a program. In the present second embodiment, this program is stored in a computer-readable recording medium.

In the present second embodiment, this recording medium may be a program medium implemented by a memory necessary for processing in the computer shown in Fig. 2, such as memory 624 itself, or may be a program medium that can be read as a result that a magnetic tape or CD-ROM 642 serving as a storage medium is inserted in a program reader such as a magnetic tape apparatus and CD-ROM driver 640 provided as an external memory device. In any case, the stored program may be configured to be accessed and executed by CPU 622.

Here, the program medium described above is a recording medium configured to be removable from a computer main body, and it may be a tape type medium such as a magnetic tape or a cassette tape, a disc type medium such as a magnetic disc including FD 632 and fixed disk 626 and an optical disc including CD-ROM 642/an MO (Magnetic Optical Disc)/an MD (Mini Disc)/a DVD (Digital Versatile Disc), a card type medium such as an IC card (including a memory card)/an optical card, or a medium carrying a program in a non-volatile manner including a semiconductor memory such as a mask ROM, an EPROM (Erasable and Programmable ROM), an EEPROM (Electrically EPROM), and a flash ROM.

In addition, in the present embodiment, as the computer is configured such that it can be connected to communication network 300 including the Internet through communication interface 680, a medium temporarily carrying a program by downloading through these communication networks may be employed.

General tendency is such that various program modules are prepared as a part of an operating system of a computer and an application program calls these modules in a prescribed sequence when necessary, to perform processing. In such a case, software itself for implementing the pattern recognition device does not include such a module but the software implements the pattern recognition device only when it cooperates with the operating system in the computer in Fig. 2. It can be considered, however, that, so long as a general platform is employed, it is not necessary to distribute software including such a module but the software itself not including the module and a recording medium recording the software (and a data signal when such software is distributed over a network) implement an embodiment.

It should be understood that the embodiments disclosed herein are illustrative and non-restrictive in every respect. The scope of the present invention is defined by the terms of the claims, rather than the description above, and is intended to include any modifications within the scope and meaning equivalent to the terms of the claims.

INDUSTRIAL APPLICABILITY

The present invention is applicable to various devices having a function to recognize a pattern of an image. Therefore, the present invention can be utilized not only in an OCR identifying a character but also in an authentication device based on a face image, a fingerprint and a seal impression, as well as all devices having a function to recognize a pattern of other images.

**Claims**

1. A pattern recognition device, comprising:

   a dictionary unit storing a plurality of dictionary patterns;
   a dictionary Collation vector storage unit storing a dictionary collation vector consisting of a prescribed number of components indicating a feature of the dictionary pattern in correspondence with each of said plurality of dictionary patterns, each component indicating 1 or 0;
   a collation vector generation unit generating, based on an input pattern, an input collation vector consisting of said prescribed number of components indicating a feature of the input pattern, each component indicating 1 or 0;
   a vector matching score determination unit calculating a matching score based on an inner product of each said dictionary collation vector read from said dictionary collation vector storage unit and said input collation vector; and
   a collation unit collating said input collation vector with said dictionary collation vector for which said matching score greater than a prescribed threshold value has been calculated, and
   the pattern recognition device performing pattern matching between said input pattern and only said dictionary pattern corresponding to said dictionary collation vector determined as matching with said input collation vector based on a result of collation.

2. The pattern recognition device according to claim 1, wherein
   said prescribed threshold value is stored in advance in said dictionary collation vector storage unit for each said dictionary collation vector.

3. The pattern recognition device according to claim 2, wherein
   said feature indicates density of an image and said component indicates the density with 1 and 0, and
   when total number of components of said input collation vector indicating 1 is equal to or smaller than a numeric value set in advance, said matching score indicates a ratio of a value of said inner product of said dictionary collation vector and said input collation vector to total number of components of said dictionary collation vector indicating 1.

4. The pattern recognition device according to claim 1, wherein
   said matching score indicates a ratio of a value of said inner product of said dictionary collation vector and said input collation vector to total number of components of said input collation vector indicating 1.

5. The pattern recognition device according to claim 1, wherein
   said matching score indicates a ratio of a value of said inner product of said dictionary collation vector and said input collation vector to total number of components of said dictionary collation vector indicating 1.

6. The pattern recognition device according to claim 1, wherein

said feature indicates density of an image.

7. The pattern recognition device according to claim 1, wherein
said feature indicates density of an image and said component indicates the density with 1 and 0, and
when total number of components of said input collation vector indicating 1 is greater than a numeric value set in advance, said matching score indicates a ratio of a value of said inner product of said dictionary collation vector and said input collation vector to the total number of components of said input collation vector indicating 1.

8. The pattern recognition device according to claim 7, wherein
said feature indicates density of an image and said component indicates the density with 1 and 0, and
when the total number of components of said input collation vector indicating 1 is equal to or smaller than the numeric value set in advance, said matching score indicates a ratio of the value of said inner product of said dictionary collation vector and said input collation vector to total number of components of said dictionary collation vector indicating 1.

9. The pattern recognition device according to claim 1, wherein
said feature indicates density of an image and said component indicates the density with 1 and 0, and
when total number of components of said input collation vector indicating 1 is equal to or smaller than a numeric value set in advance, said matching score indicates a ratio of a value of said inner product of said dictionary collation vector and said input collation vector to total number of components of said dictionary collation vector indicating 1.

10. A pattern recognition method using an information processing device including a dictionary unit storing a plurality of dictionary patterns and a dictionary collation vector storage unit storing a dictionary collation vector consisting of a prescribed number of components indicating a feature of the dictionary pattern in correspondence with each of said plurality of dictionary patterns, each component indicating 1 or 0, comprising the steps of:

generating, based on an input pattern, an input collation vector consisting of said prescribed number of components indicating a feature of the input pattern, each component indicating 1 or 0;
calculating a matching score based on an inner product of each said dictionary collation vector read from said dictionary collation vector storage unit and said input collation vector;
collating said input collation vector with said dictionary collation vector for which said matching score greater than a prescribed threshold value has been calculated; and
performing pattern matching between said input pattern and only said dictionary pattern corresponding to said dictionary collation vector determined as matching with said input collation vector based on a result of collation.

11. A pattern recognition program product for causing a computer to perform the pattern recognition method according to claim 10.

12. A machine-readable recording medium recording a program for causing a computer to perform the pattern recognition method according to claim 10.

# FIG.1

# FIG.2

700

101
IMAGE INPUT UNIT

660 MOUSE

622 CPU

610 DISPLAY

PRINTER
690

KEYBOARD
650

MEMORY
624

FIXED DISK
626

FD DRIVER
630

CD-ROM DRIVER
640

COMMUNICATION INTERFACE
680

632

642

300

EP 2 073 146 A1

## FIG.3

START

IMAGE DATA INPUT — S1

CUT — S2

EXTRACT INPUT FEATURE VECTOR — S3

PATTERN MATCHING
(CALCULATE SIMILARITY) — S4

END

## FIG.4

START

DIVISION INTO MESH AREAS — S31

NORMALIZATION — S33

STORAGE — S35

RETURN

## FIG.5

| e1 | e2 | e3 | e4 | e5 | e6 | e7 | e8 |
|-----|-----|-----|-----|-----|-----|-----|-----|
| e9 | e10 | e11 | e12 | e13 | e14 | e15 | e16 |
| e17 | e18 | e19 | e20 | e21 | e22 | e23 | e24 |
| e25 | e26 | e27 | e28 | e29 | e30 | e31 | e32 |
| e33 | e34 | e35 | e36 | e37 | e38 | e39 | e40 |
| e41 | e42 | e43 | e44 | e45 | e46 | e47 | e48 |
| e49 | e50 | e51 | e52 | e53 | e54 | e55 | e56 |
| e57 | e58 | e59 | e60 | e61 | e62 | e63 | e64 |

# FIG.6

(A)

| | | | | | | | |
|---|---|---|---|---|---|---|---|
| 0 | 0 | 14 | 52 | 53 | 16 | 0 | 0 |
| 0 | 0 | 32 | 53 | 53 | 34 | 0 | 0 |
| 0 | 4 | 49 | 35 | 31 | 50 | 5 | 0 |
| 0 | 22 | 53 | 16 | 11 | 53 | 24 | 0 |
| 0 | 40 | 46 | 2 | 0 | 42 | 40 | 0 |
| 11 | 52 | 50 | 37 | 37 | 49 | 52 | 11 |
| 31 | 53 | 23 | 16 | 16 | 21 | 52 | 31 |
| 48 | 43 | 0 | 0 | 0 | 0 | 39 | 48 |

~100

(B)

AR

| | | | | | | | |
|---|---|---|---|---|---|---|---|
| 0 | 0 | 0 | 1 | 1 | 0 | 0 | 0 |
| 0 | 0 | 1 | 1 | 1 | 1 | 0 | 0 |
| 0 | 0 | 1 | 1 | 0 | 1 | 0 | 0 |
| 0 | 0 | 1 | 0 | 0 | 1 | 0 | 0 |
| 0 | 1 | 1 | 0 | 0 | 1 | 1 | 0 |
| 0 | 1 | 1 | 1 | 1 | 1 | 1 | 0 |
| 0 | 1 | 0 | 0 | 0 | 0 | 1 | 0 |
| 1 | 1 | 0 | 0 | 0 | 0 | 1 | 1 |

101

(C)                925

| | |
|---|---|
| 00011000 | ~IR1 |
| 00111100 | ~IR2 |
| 00110100 | ~IR3 |
| 00100100 | ~IR4 |
| 01100110 | ~IR5 |
| 01111110 | ~IR6 |
| 01000010 | ~IR7 |
| 11000011 | ~IR8 |

FIG.7

825

925

926

| INPUT COLLATION VECTOR TABLE | → | INPUT COUNT DATA |

## FIG.8

(A)

CHi

| DICTIONARY REGISTRATION CHARACTER |
| --- |

813

VEi

| | |
| --- | --- |
| VT1 | DICTIONARY FEATURE VECTOR |
| VT2 | DICTIONARY FEATURE VECTOR |
| ⋮ | ⋮ |
| VTj | DICTIONARY FEATURE VECTOR |
| ⋮ | ⋮ |
| VTm | DICTIONARY FEATURE VECTOR |

| | |
| --- | --- |
| DATA | ~D1 |
| DATA | ~D2 |
| ⋮ | |
| DATA | ~Dj |
| ⋮ | |
| DATA | ~Dm |

| | |
| --- | --- |
| DICTIONARY COLLATION VECTOR TABLE | ~D1j |
| DICTIONARY COUNT DATA | ~D2j |
| DETERMINATION THRESHOLD VALUE (DICTIONARY) DATA | ~D3j |
| DETERMINATION THRESHOLD VALUE (INPUT) DATA | ~D4j |

(B)

D1j

| | |
| --- | --- |
| 11000000 | ~RR1 |
| 11100000 | ~RR2 |
| 10000000 | ~RR3 |
| 10000000 | ~RR4 |
| 10000000 | ~RR5 |
| 10000000 | ~RR6 |
| 11100000 | ~RR7 |
| 11000000 | ~RR8 |

# FIG.9

VTj

| 61 | 16 | 0 | 0 | 0 | 10 | 11 | 0 |
|----|----|----|----|----|----|----|----|
| 68 | 21 | 0 | 0 | 0 | 21 | 42 | 3 |
| 68 | 16 | 0 | 0 | 0 | 7 | 58 | 27 |
| 67 | 14 | 0 | 1 | 0 | 1 | 35 | 59 |
| 64 | 18 | 7 | 7 | 0 | 1 | 19 | 73 |
| 56 | 34 | 28 | 19 | 1 | 1 | 14 | 56 |
| 35 | 68 | 49 | 20 | 0 | 0 | 4 | 20 |
| 7 | 59 | 51 | 6 | 0 | 0 | 0 | 1 |

D1j

| 10000000 |
|----------|
| 10000010 |
| 10000010 |
| 10000011 |
| 10000001 |
| 11000001 |
| 11100000 |
| 01100000 |

D2j

| 18 |
|----|

D3j

| 70% |
|-----|

D4j

| 60% |
|-----|

## FIG.10

(A)          VTj

| 0 | 0 | 15 | 34 | 0 | 0 | 3 | 0 |
|---|---|----|----|---|---|---|---|
| 17 | 39 | 48 | 55 | 49 | 50 | 36 | 0 |
| 2 | 6 | 32 | 25 | 4 | 25 | 0 | 0 |
| 0 | 10 | 49 | 53 | 49 | 57 | 45 | 8 |
| 19 | 47 | 42 | 19 | 43 | 13 | 14 | 52 |
| 51 | 8 | 29 | 49 | 34 | 0 | 0 | 59 |
| 54 | 21 | 49 | 42 | 0 | 0 | 32 | 41 |
| 15 | 27 | 13 | 15 | 0 | 49 | 36 | 5 |

(B)          100

| 61 | 16 | 0 | 0 | 0 | 10 | 11 | 0 |
|----|----|---|---|---|----|----|---|
| 68 | 21 | 0 | 0 | 0 | 21 | 42 | 3 |
| 68 | 16 | 0 | 0 | 0 | 7 | 58 | 27 |
| 67 | 14 | 0 | 1 | 0 | 1 | 35 | 59 |
| 64 | 18 | 7 | 7 | 0 | 1 | 19 | 73 |
| 56 | 34 | 28 | 19 | 1 | 1 | 14 | 56 |
| 35 | 68 | 49 | 20 | 0 | 0 | 4 | 20 |
| 7 | 59 | 51 | 6 | 0 | 0 | 0 | 1 |

(C)    D1j

| | |
|---|---|
| RR1 | 00010000 |
| RR2 | 01111110 |
| RR3 | 00000000 |
| RR4 | 00111110 |
| RR5 | 01101001 |
| RR6 | 10011001 |
| RR7 | 10110001 |
| RR8 | 00000110 |

(D)    101

| | |
|---|---|
| IR1 | 10000000 |
| IR2 | 10000010 |
| IR3 | 10000010 |
| IR4 | 10000011 |
| IR5 | 10000001 |
| IR6 | 11000001 |
| IR7 | 11100000 |
| IR8 | 01100000 |

$\Rightarrow$

(E)    200

| | |
|---|---|
| 00000000 | R |
| 00000010 | R |
| 00000000 | R |
| 00000010 | R |
| 00000001 | R |
| 10000001 | R |
| 10100000 | R |
| 00000000 | R |

(F)

| |
|---|
| 1 |
| 6 |
| 0 |
| 5 |
| 4 |
| 4 |
| 4 |
| 2 |

$\Rightarrow$ D2j | 26 |

(G)

| |
|---|
| 1 |
| 2 |
| 2 |
| 3 |
| 2 |
| 3 |
| 3 |
| 2 |

$\Rightarrow$ 926 | 18 |

(H)    201

| |
|---|
| 0 |
| 1 |
| 0 |
| 1 |
| 1 |
| 2 |
| 2 |
| 0 |

# FIG.11

(A) VTj

| 54 | 54 | 0 | 0 | 0 | 0 | 0 | 0 |
|----|----|----|----|----|----|----|----|
| 54 | 54 | 0 | 0 | 0 | 0 | 0 | 0 |
| 54 | 54 | 0 | 0 | 0 | 0 | 0 | 0 |
| 54 | 54 | 0 | 0 | 0 | 0 | 0 | 0 |
| 54 | 54 | 0 | 0 | 0 | 0 | 0 | 0 |
| 54 | 54 | 0 | 0 | 0 | 0 | 0 | 0 |
| 54 | 54 | 13 | 11 | 11 | 11 | 11 | 10 |
| 54 | 54 | 54 | 54 | 54 | 54 | 54 | 54 |

(B) LEARNING FEATURE VECTOR

(C) D1j

| 11000000 |
|----------|
| 11000000 |
| 11000000 |
| 11000000 |
| 11000000 |
| 11000000 |
| 11000000 |
| 11111111 |

(D) 103

| 00011000 |
|----------|
| 00111100 |
| 00110100 |
| 00100100 |
| 01100110 |
| 01111110 |
| 01000010 |
| 11000011 |

(E) 203

| 00000000 |
|----------|
| 00000000 |
| 00000000 |
| 00000000 |
| 01000000 |
| 01000000 |
| 01000000 |
| 11000011 |

(F) 104

| 2 |
|---|
| 2 |
| 2 |
| 2 |
| 2 |
| 2 |
| 2 |
| 8 |

(G) 105

| 2 |
|---|
| 4 |
| 3 |
| 2 |
| 4 |
| 6 |
| 2 |
| 4 |

(H) 204

| 0 |
|---|
| 0 |
| 0 |
| 0 |
| 1 |
| 1 |
| 1 |
| 4 |

## FIG.12

```
                    START

              DICTIONARY VECTOR INPUT  ─ S1301

                MinD=1、MinI=1  ─ S1302

              GENERATE DICTIONARY
              COLLATION VECTOR  ─ S1303

                CALCULATE Sd  ─ S1304

                                        S1305
              HAS LEARNING VECTOR INPUT ENDED ?  ─── Y
                       │ N
              LEARNING VECTOR INPUT  ─ S1306

              GENERATE LEARNING
              COLLATION VECTOR  ─ S1307

                CALCULATE Si  ─ S1308

                CALCULATE W  ─ S1309

                                        S1310
                  W/Sd < MinD ?  ──── N
                       │ Y
                MinD=W/Sd  ─ S1311

                                        S1312
          N ──── W/Si < MinI ?
                       │ Y
                MinI=W/Si  ─ S1313

                                        S1314
              OUTPUT MinD, MinI

                     END
```

## FIG.13

| DECIMAL NUMBER | BINARY NUMBER | THE NUMBER OF BITS |
|---|---|---|
| 0 | 00000000 | 0 |
| 1 | 00000001 | 1 |
| 2 | 00000010 | 1 |
| 3 | 00000011 | 2 |
| 4 | 00000100 | 1 |
| 5 | 00000101 | 2 |
| 6 | 00000110 | 2 |
| 7 | 00000111 | 3 |
| 8 | 00001000 | 1 |
| 9 | 00001001 | 2 |
| 10 | 00001010 | 2 |
| 11 | 00001011 | 3 |
| ⋮ | ⋮ | ⋮ |
| 255 | 11111111 | 8 |

## FIG.14

```
            ( START )
                |
                v
   +---------------------------+
   |   FEATURE VECTOR INPUT    |---S1501
   +---------------------------+
                |
                v
   +---------------------------------+
   | GENERATE INPUT COLLATION VECTOR |---S1502
   +---------------------------------+
                |
                v
   +---------------------------+
   |       CALCULATE SI        |---S1503
   +---------------------------+
                |
                v
   +---------------------------+
   |           i=1             |---S1504
   +---------------------------+
                |
                v
```

$i <$ THE NUMBER OF DICTIONARY REGISTRATION CHARACTERS ? — S1505 — N

Y

SET DICTIONARY COLLATION VECTOR, MinD, MinI, AND Sd — S1506

CALCULATE W — S1507

S1508a — i++

N — $W/Sd >$ MinD ? — S1508

Y

N — $W/SI >$ MinI ? — S1509

Y

CALCULATE SIMILARITY — S1510

SORT SIMILARITY — S1511

DETAILED MATCHING — S1512

OUTPUT RECOGNITION RESULT CANDIDATE CHARACTER — S1513

( END )

EP 2 073 146 A1

## FIG.15

```
            START
              │
              ▼
   FEATURE VECTOR INPUT ──── S1601
              │
              ▼
 GENERATE INPUT COLLATION VECTOR ──── S1502
              │
              ▼
      CALCULATE SI ──── S1503
              │
              ▼
    SET DENSITY FLAG ──── S1604
              │
              ▼
         i=1 ──── S1505
              │
              ▼
    i < THE NUMBER ──── S1505
  OF DICTIONARY REGISTRATION ──── N
     CHARACTERS ?
              │ Y
              ▼
  SET DICTIONARY COLLATION ──── S1506
  VECTOR, MinD, MinI, AND Sd
              │
              ▼
     CALCULATE W ──── S1507
              │
              ▼
  i++ ──── S1508a      F = 1 ? ──── S1609
              │ N          │ Y
              ▼
  W/Sd > MinD ? ──── S1508   Y
      │ N
      ▼
  W/SI > MinI ? ──── S1509   Y
      │ N
      ▼
  CALCULATE SIMILARITY ──── S1510
              │
              ▼
    SORT SIMILARITY ──── S1511
              │
              ▼
   DETAILED MATCHING ──── S1512
              │
              ▼
 OUTPUT RECOGNITION RESULT ──── S1513
   CANDIDATE CHARACTER
              │
              ▼
            END
```

29

# FIG.16

```
        ┌─────────────┐
        │    START    │
        └─────────────┘
               │
               ▼
┌──────────────────────────────────┐
│       INPUT SI AND F (=0)        │──── S1701
└──────────────────────────────────┘
               │
               ▼        ┌─ S1702
          ╱─────────────╲
         ╱               ╲        N
        ╱    SI > T ?     ╲───────────┐
        ╲                 ╱           │
         ╲               ╱            │
          ╲─────────────╱             │
               │ Y                    │
               ▼                      │
          ┌─────────┐                 │
          │   F=1   │──── S1703       │
          └─────────┘                 │
               │◄─────────────────────┘
               ▼
        ┌─────────────┐
        │   RETURN    │
        └─────────────┘
```

FIG.17

FIG.18

## FIG.19

| 0 | 0 | 14 | 52 | 53 | 16 | 0 | 0 |
|---|---|----|----|----|----|---|---|
| 0 | 0 | 32 | 53 | 53 | 34 | 0 | 0 |
| 0 | 4 | 49 | 35 | 31 | 50 | 5 | 0 |
| 0 | 22 | 53 | 16 | 11 | 53 | 24 | 0 |
| 0 | 40 | 46 | 2 | 0 | 42 | 40 | 0 |
| 11 | 52 | 50 | 37 | 37 | 49 | 52 | 11 |
| 31 | 53 | 23 | 16 | 16 | 21 | 52 | 31 |
| 48 | 43 | 0 | 0 | 0 | 0 | 39 | 48 |

## FIG.20

811

| CH1:DICTIONARY REGISTRATION CHARACTER | CH2:DICTIONARY REGISTRATION CHARACTER | CH3:DICTIONARY REGISTRATION CHARACTER | ··· | CHi | ··· | CHn:DICTIONARY REGISTRATION CHARACTER |
|---|---|---|---|---|---|---|

VE1  VE2  VE3  VEn

| DICTIONARY FEATURE VECTOR GROUP | DICTIONARY FEATURE VECTOR GROUP | DICTIONARY FEATURE VECTOR GROUP | ··· | VEi | ··· | DICTIONARY FEATURE VECTOR GROUP |
|---|---|---|---|---|---|---|

| VT1:DICTIONARY FEATURE VECTOR | VT2:DICTIONARY FEATURE VECTOR | VT3:DICTIONARY FEATURE VECTOR | ··· | VTj | ··· | VTm:DICTIONARY FEATURE VECTOR |
|---|---|---|---|---|---|---|

## FIG.21

```
                    START

         CHARACTER IMAGE INPUT ─ S101

                    CUT        ─ S102

              EXTRACT INPUT
              FEATURE VECTOR   ─ S103

                    i=1        ─ S104

                           ─ S105
                                          N
                  i < N ?

                    Y

S110 ─  i++  ◄─  CALCULATE Di  ─ S106

                               ─ S107
         SORT DISTANCE VALUE ◄

          DETAILED MATCHING    ─ S108

          OUTPUT CANDIDATE
          CHARACTER            ─ S109

                    END
```

## FIG.22

| DICTIONARY FEATURE VECTOR 1 | DICTIONARY FEATURE VECTOR 2 | DICTIONARY FEATURE VECTOR 3 | · · | DICTIONARY FEATURE VECTOR N |
|---|---|---|---|---|

6001

| DETERMINATION THRESHOLD VALUE T1 | DETERMINATION THRESHOLD VALUE T2 | DETERMINATION THRESHOLD VALUE T3 | · · | DETERMINATION THRESHOLD VALUE Tn |
|---|---|---|---|---|

6002

## FIG.23

```
                    ┌─────────────┐
                    │    START    │
                    └─────────────┘
                           │
                           ▼
          ┌──────────────────────────────┐
          │   CHARACTER IMAGE INPUT       │──S201
          └──────────────────────────────┘
                           │
                           ▼
          ┌──────────────────────────────┐
          │            CUT               │──S202
          └──────────────────────────────┘
                           │
                           ▼
          ┌──────────────────────────────┐
          │ EXTRACT INPUT FEATURE VECTOR  │──S203
          └──────────────────────────────┘
                           │
                           ▼
          ┌──────────────────────────────┐
          │            i=0               │──S204
          └──────────────────────────────┘
```

S205 — $i < N$ ?  N

S206 — $j=0$, $D_i=0$

S214 — $i$++

S207 — $j < 64$ ?  N

S208 — CALCULATE $D_i$

S213 — $D_i$ = MAXIMUM DISTANCE VALUE

S209 — $D_i \leq T_i$ ?  N

S210 — $j$++

S211 — SORT DISTANCE VARIABLE

S212 — DETAILED MATCHING

S213 — OUTPUT CANDIDATE CHARACTER

END

## INTERNATIONAL SEARCH REPORT

| International application No. |
| --- |
| PCT/JP2007/064322 |

**A. CLASSIFICATION OF SUBJECT MATTER**
*G06K9/62*(2006.01)i

According to International Patent Classification (IPC) or to both national classification and IPC

**B. FIELDS SEARCHED**

Minimum documentation searched (classification system followed by classification symbols)
G06K9/62

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 6-20098 A (Sharp Corp.),<br>28 January, 1994 (28.01.94),<br>Par. Nos. [0010] to [0030]; Figs. 1, 3, 4<br>(Family: none) | 1,2,6,10-12<br>5 |
| Y | JP 6-60226 A (Nireco Corp.),<br>04 March, 1994 (04.03.94),<br>Par. Nos. [0023] to [0027]; Fig. 5<br>(Family: none) | 5 |
| A | JP 2-81282 A (Hitachi, Ltd.),<br>22 March, 1990 (22.03.90),<br>Page 3, upper left column, line 9 to page 3,<br>upper left column, line 18<br>(Family: none) | 3,4,7-9 |

☐ Further documents are listed in the continuation of Box C.     ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>07 August, 2007 (07.08.07) | Date of mailing of the international search report<br>14 August, 2007 (14.08.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2007/064322 |

---

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

---

**Box No. III      Observations where unity of invention is lacking (Continuation of item 3 of first sheet)**

This International Searching Authority found multiple inventions in this international application, as follows:

See extra sheet.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

**INTERNATIONAL SEARCH REPORT**

International application No.

PCT/JP2007/064322

Continuation of Box No.III of continuation of first sheet(2)

The matters common to the inventions of claims 1 - 12 are "a dictionary unit stored with a plurality of dictionary patterns, and dictionary collation vector storing means for storing a dictionary collation vector composed of a predetermined number of components exhibiting the features of said dictionary pattern and each indicating 1 or 0", means "for generating, on the basis of an input pattern, an input collation vector composed of said predetermined number of components exhibiting the features of said input pattern and each indicating 1 or 0", means "for collating said dictionary featuring vector, for which said coincidence larger than a predetermined threshold value is calculated, and said input collation vector", and means "for performing a pattern matching between said input pattern and only said dictionary pattern corresponding to said dictionary collation vector, which is so decided on the basis of said collation result as to coincide with said input collation vector".

However, the search has revealed that the aforementioned common matters are not novel, since they were disclosed in document: JP 6-20098 A (Sharp Corp.), 28 January, 1994 (28.01.94), Par. [0010] to Par. [0030], and Figs. 1, 3 and 4 (no family).

As a result, the aforementioned common matters are not the special technical feature within the meaning of PCT Rule 13.2, second sentence, because they make no contribution over the prior art.

Therefore, no common matter exists among the inventions of claims 1 - 12.

No technical relationship within the meaning of PCT Rule 13 can be found out among those different inventions, because there exists no other common matter which can be considered as a special technical feature within the meaning of PCT Rule 13.2, second sentence.

Hence, it is apparent that the inventions of claims 1 - 12 do not comply with the requirement of unity of invention.

Form PCT/ISA/210 (extra sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 63109592 A

- JP 63216188 A